# EUROPEAN PATENT APPLICATION

(11) **EP 4 036 834 A1**
(43) Date of publication of application: **03.08.2022**
(21) Application number: 21154420.0
(22) Date of filing: 29.01.2021
(51) Int. Cl.: G06Q 40/02

(54) **SYSTEM AND METHOD FOR SECURITY EVALUATION AND PROCESSING**

(71) Applicant: Banxware GmbH, 10117 Berlin (DE)
(72) Inventor: Röhrborn, Jens, 10117 Berlin (DE); Kipp, Nicolas, 10117 Berlin (DE); Heiß, Fabian, 10117 Berlin (DE)
(74) Representative: Stellbrink & Partner Patentanwälte mbB

(57) **Abstract**

Disclosed is a system for automatic security evaluation, the system comprising a processing module (1) and a node (2) configured to provide applicant data, wherein the processing module (1) is configured to receive applicant data from the node (2), wherein the system comprises a data module (4) configured to provide secondary applicant data, wherein the processing module (1) is configured to generate an access condition based on the received applicant data and secondary applicant data, and to qualify an applicant for receiving an access grant including the access condition on the basis of the applicant data and secondary applicant data.

## Description

The present invention relates to an automatic analysis of a user dataset to grant the user access to a resource, in particular a hardware resource. More specifically, the present invention is a system and method comprising automatic data harvesting to generate the user dataset and automatically determine the level of access to the resource granted to the user based on the user data set. In particular, an overall security score can be assigned which represents a security evaluation, wherein a threshold-based evaluation of the security score can determine the specific level of access to the resource, i.e., a camera grid, processing cluster or transaction resources.

The automatic analysis can comprise validating the provided dataset and checking the dataset against access condition thresholds, wherein access can be granted automatically when required value thresholds are exceeded by the respective validated user dataset values.

A Security evaluation may entail complex, time consuming, and frequently expensive methods directed toward gathering information and facilitating completion of the evaluation.

In particular, small or medium sized businesses may require additional resources to increase their productivity and/or profitability. This can further relate to initiating sales and/or increasing their sales volume. The required resources may be accessed, respectively borrowed, on a short-term or long-term basis. For example, short-term access may be used to bridge initial production requirements until revenue from the use of these resources can be generated and long-term access may be used to sustain the business until it reaches a state of self-sustainability, respectively profitability.

In particular, due to increasingly dynamic markets, where products and/or services may have short life spans, require frequent alterations, updates, modifications or a general overhaul may be necessary to sustain sales, the need to use resources may arise on an equally dynamic scale. Thus, the application and granting process needs to be match the dynamics of these markets to allow the applicant to remain competitive. Existing manual applications requiring multiple forms and, in particular, requiring a review by staff can be cumbersome and slow.

Therefore, to increase efficiency based on acquiring goods and services, specifically independent from the current resource basis of the applicant, fast automated security evaluation and processing to grant access to resources is required. Depending on the circumstances, it may not be possible to anticipate the need to access additional resources and thus, arrangements to receive access to additional resources cannot be made in advance of the need. Furthermore, the extent of a resource need may not be known or knowable in advance so that it is inconvenient and detrimental to the efficiency and profitability of a business when a specific access arrangement cannot be completed in a short amount of time and takes considerable effort to complete.

In addition to the requirements of the applicant, the supplier needs to have factual confidence that the security level of the applicant is sufficient to allow access within parameters set by the supplier. Moreover, relating to financial resources, the supplier can be a lender which may set a confidence threshold pertaining to the successful repayment within the agreed upon parameters (i.e., repayment rate, repayment interval). The confidence of the supplier is based on available applicant information. Consequently, on the one hand there exists a need for the applicant to provide as little information and documentation as possible to minimize the effort necessary to acquire the resource. On the other hand, there exists a need of the supplier to acquire as much information and documentation as possible prior to granting access to the resource, resulting in a need for automatic information acquisition and its provision to the supplier, respectively the applicant for confirmation.

Furthermore, there is a need for transparency and safeguard regarding the conditions of the access granting towards the applicant. This may in particular serve the purpose to not overwhelm the applicant with commitment options the applicant may fail to adhere to.

The applicant may require a custom access offer comprising contractual conditions tailored to the requirements of the business which may not be covered by a standing offer by the supplier. Thus, the need arises to customize an offer as part of the application but still retain the possibility for receiving access using an automated process.

Further obstacles can arise due to the requirement of adhering to juridical restrictions regarding access to the particular resource. For example, access to privacy relevant hardware, surveillance devices, large scale computing power or access to financial funds. In particular, issues regarding the verification of the applicant can postpone an application and/or require manual review.

In light of the above, the present invention seeks to overcome or at least alleviate the shortcomings and disadvantages of known access granting implementations. It is an object of this invention to provide an improved system and method for automatically issuing access to a resource.

These objects are met by the system and the method of the present invention.

According to an aspect, the present invention relates to a system for automatic security evaluation and processing, the system comprising a processing module configured to receive applicant data and to qualify the applicant for receiving access to the resource.

The security evaluation can comprise a check of provided applicant data, wherein the applicant data comprises security relevant data entries pertaining to the applicant and the type of hardware to be accessed. In particular, adherence to data privacy standards, civilian, official, governmental or regulatory use criteria and exact specification of the hardware parameters can be comprised in the applicant data.

The processing module can be configured to adjust the hardware resource to be accessed according to the provided applicant data. In particular settings of the provided resource can be adjusted to match the applicant data. In the example of a camera system, resolution, frame rate, time interval of availability per day/week/months, monochromatic or full-color, specified area of networked cameras, surveillance area.

The processing module can further be configured to harvest applicant data by accessing third party data providers to receive further applicant data to generate a sufficiently detailed applicant data set on which the resource grant decision can be based.

The processing module can be configured to generate an applicant score based on the received applicant data and to compare the applicant score with a score threshold and to qualify the applicant for access to the resource when the applicant score exceeds the score threshold. The score threshold can be varied based on the required level of access to the hardware resource. Thus, the threshold value may increase when the level of access to the hardware resource is increased, i.e., a larger camera grid, higher resolution, increased processing power. The threshold may further increase with access to further modules, i.e., facial recognition, object tracking and/or image processing.

The processing module can be configured to adjust a hardware setting according to the received applicant data. Adjusting the hardware setting can lock the hardware resource to that setting, so as to limit the applicant to the use of the particular setting during the access to the hardware resource.

The processing module can further be configured to grant limited resource access to the applicant according to the received applicant data. In particular, the processing module can generate an access offer differing from the initial application based on the received applicant data so as to offer the applicant an access possibility where the provided applicant data fulfills the particular access requirements. Thus, the applicant may request a higher level of access than is supported by the provided applicant data and the processing module may deny the requested access level and instead offer a reduced access level which can be automatically granted based on the provided applicant data.

A security evaluation can further pertain to the qualification to receive financial resources, i.e., a loan. Generating a resource access grant, respectively a loan, can comprise selecting access conditions based on the applicant data and combine the access conditions to provide a custom access offer to the applicant. The customization of the access conditions can be based on limits, respectively parameter ranges provided by an access provider issuing the access grant. The processing module can function as an intermediary between the applicant and an access provider to generate an access grant offer that satisfies requirements of the applicant according to the applicant data and that satisfies loan parameters set by the access provider. The parameters set by the access provider can also be based on the provided applicant data.

The generated access grant can be uniquely tailored to the requirements of the applicant within the parameters for the access conditions accepted by the access provider.

The resource, can comprise financial funds and/or the access grant can be a loan. Furthermore, the access provider can be a lender and the access conditions can be loan conditions for the loan provided to the applicant. Additionally, the custom access offer can be a custom loan offer. Thus, the present invention can thus relate to a system for automatic lending, wherein the processing module configured to receive applicant data and to qualify the applicant for a loan.

Furthermore, a generated loan offer within the accepted parameters may be granted and/or disbursed without requiring further approval by the lender, in particular without a manual review of the generated loan offer. Thus, the processing module can provide a loan to the applicant in an automated process.

The applicant can be a merchant, an individual, a corporation, a loan intermediary, a financing entity and/or a legal representative of a juridical person, specifically a company.

The applicant data can comprise business status data, key data from annual reports, loan data, business statistics, personal data, account balances, account transactions, and/or platform sales transactions data. The loan data may pertain to active loans, previous loans and/or future loans, that the applicant already signed for. The applicant data can provide an objective financial status of the applicant. Each provided datum of the applicant data can be checked against the possible loan conditions, wherein each datum may determine the parameter range of the loan conditions available to the applicant. The parameter range can vary based on the associated risk of providing a loan to the applicant. The risk threshold to grant a loan may vary depending on the lender. Thus, the processing module can be configured to generate a plurality of loan offers comprising loan offers backed by different lenders. The lenders may have varying risk thresholds and thus provide varying parameter ranges for the loan conditions based on the provided applicant data.

The processing module can generate a loan condition based on the received applicant data. The processing module can further be configured to generate a plurality of loan conditions. The loan conditions can, for example, comprise a loan amount, interest, repayment rate, loan period, loan provider and/or fees. The loan can comprise a plurality of loan conditions, wherein each loan condition may be modified by the processing module according to the provided applicant data. The applicant may further provide preferences regarding the loan to resolve ambiguity of similar loan offers.

The processing module can receive and process loan data and generate a loan based on the applicant data and the loan data. The loan data can be received from a loan provider in particular on the basis of the provided applicant data, i.e., the applicant providing information regarding existing loans. The processing module can determine whether the applicant has reached a threshold for an overall amount funds provided to the applicant via loans. The threshold may vary depending on the applicant data provided.

The system can comprise a node which is configured to receive the applicant data in form of an applicant input. The processing module can be configured to receive applicant data from the node. The applicant input can be provided via a human interface device comprising an audio, video or haptic input device. The node can be a networked device and configured to alert the applicant when data is received, in particular information regarding the loan application of the applicant.

The node can be configured to communicate with the processing module. This achieves the advantage that the node can provide applicant data directly to the processing module to increase the efficiency of the loan application process. The applicant data can be evaluated by the processing module directly upon reception and the processing module can provide information to the node pertaining to the evaluation of the provided applicant data. The loan application process can be segmented into a plurality of application steps, wherein each step can require a data transfer from the node to the processing module and/or a data transfer from the processing module to the node. Due to the capability of directly transferring data delays that would occur via intermediary modules or manual review can be eliminated or at least reduced.

The node can be configured to authenticate an applicant to the processing module. The granting of a loan can require providing financial data, private data and/or other non-public data to the processing module. Furthermore, providing a loan requires a predetermined level of certainty that the applicant data provided coincides with the applicant providing the data or that the applicant is a legal representative of the entity the applicant data pertains to. By authenticating the applicant to processing module by the node the advantage can be achieved, that the processing module can base providing a loan to the applicant on the authentication via the node. In particular, the application executed on the node which connects the applicant to the processing module can be a trusted application by the processing module and thus, the authentication of the applicant by the node to the processing module can be trusted.

The system can comprise a node interface module which can be configured to communicate with the node and to receive the applicant data. The node interface module can be integrated into a platform, wherein the platform provides means to execute sales for the applicant. The node interface module can represent an interface for the applicant accessible via the node. The applicant can complete sales of goods and/or services to customers via the platform. The node interface module can be configured as an intermediary between the node and the processing module. This achieves the advantage that the loan application means provided via the processing module can be integrated into the sales platform. The node interface module can receive applicant data and provide the received applicant data to the processing module. The node interface module can comprise an application dashboard configured to be interacted with by the applicant via the node. The platform can be provided by an independent software vendor (ISV).

The node interface module can further be configured to communicate with a payment provider. In particular, a module of the payment provider can be integrated into the platform to provide seamless transaction management pertaining to sales executed via the platform. The node interface module can be configured to send and/or receive applicant data from the payment provider.

The node can be configured to execute a dashboard application configured to display data received from the node interface module and to send data to the node interface module. This achieves the advantage of increasing the efficiency of interactions between the applicant and the platform via the node and the node interface module. In particular, the node interface module can provide information regarding the loan application status to the node, respectively integrate the loan application status into a platform user interface.

The node interface module can be configured to determine an eligibility of the applicant based on the received applicant data. Determining the eligibility can comprise identifying the applicant as eligible to take out a loan. The eligibility can be a binary decision value labeling the applicant as eligible to take out a loan or labeling the applicant as not eligible to take out a loan. The eligibility can be based on the loan options available via the processing module. The eligibility may be visible to the applicant via the node. Furthermore, the possibility to take out a loan based on a positive eligibility may be advertised to the applicant via the node and/or via alternative communication channels, i.e., via email, phone or mail.

The node interface module can be configured to receive secondary applicant data and to generate a primary qualification result based on the received secondary applicant data. The secondary applicant data can be available from a database tracking sales of the applicant and may comprise applicant details, business details, sales data and/or platform account details. The secondary applicant data may be available to the applicant via the node interface module. However, the applicant may not directly modify the secondary applicant data. The secondary applicant data may comprise a record of activities by the applicant on the sales platform provided via the node interface module. A primary qualification can indicate a handover of the loan application process from the node interface module to the processing module. The primary qualification can resemble a partial loan qualification which requires further processing and/or additional applicant data to be provided.

Initial parameters to be fulfilled to issue a primary qualification may comprise at least one of the following: the applicant is a registered member, respectively customer of the platform provided by the node interface module, a company represented by the applicant needs to be registered in a predetermined jurisdiction, wherein the jurisdiction parameter can be provided as a country code according to an ISO standard, in particular (ISO 3166). The primary qualification may further depend on a merchant category code (i.e., MCC according to ISO 81245) and/or a predetermined amount of time of active business operation. Furthermore, the primary qualification can depend on the minimum time of active business operation exceeding a respective threshold value. The predetermined minimum threshold value may preferably be a number of months, i.e., a minimum of 3 months, a minimum of 24 months and more preferably a minimum of 6 months of active business operation.

An account at the platform associated with the applicant may need to be categorized as an active account by the node interface module. An active account may be defined as an account which receives and/or executes regular payments, respectively sales. For example, an active account may need to have at least one recorded transaction within the last day, the last week or the last month. Alternatively, a moving average of sales, respectively payments may be recorded and an average sales threshold may be set to differentiate active and inactive accounts.

The node interface module can be configured to provide the secondary applicant data to the processing module, which can be configured to generate a primary qualification result based the secondary applicant data. This achieves the advantage that the primary qualification can be performed by the processing module and the node interface module may act as an intermediary data provider to the processing module.

The system can comprise a data module configured to store and/or to provide applicant data or secondary applicant data. The data module can be independently accessible by the processing module, thereby allowing efficient access of the processing module to required applicant data and/or secondary applicant data to advance the loan application. The secondary applicant data can comprise applicant sales data that may contain records pertaining to sales executed by the applicant via the platform, comprising the type of goods and/or services and the amount received.

The processing module can be configured to qualify the applicant for receiving a loan including the loan condition on the basis of the applicant data and secondary applicant data. This achieves the advantage that a complete loan approval of the applicant for the loan can be based on applicant data and secondary applicant data. In particular, the applicant data can be provided by the applicant and secondary applicant data can be provided via the data module and/or the platform.

The node interface module can be configured to access the data module to store and/or receive applicant data, applicant sales data and/or secondary applicant data. This achieves the advantage of creating an applicant profile accessible to the processing module. The database may comprise chronological data of activities, in particular sales pertaining to the applicant.

The processing module can be configured to receive sales data of platform sales performed by the applicant via the node interface module from the data module. Thus, the current loan application can be based on the sales volume of the applicant, and an estimated revenue. In particular, the processing module can determine whether the sales data can support of recurring loan repayments assuming that the recorded sales data indicate a similar sales volume in the future.

The node can be configured to authenticate an applicant to the node interface module. This achieves the advantage that the applicant can provide authentication credentials to the node interface module to link the node to an account of the applicant at the node interface module. Once the applicant is authenticated, the applicant may provide applicant data via the node to the node interface module and/or the processing module.

The node interface module and/or the processing module can be configured to authenticate the applicant and/or the node by means of authentication provided by the node. The authentication can be based on provided identification information and/or login information of the applicant. Performing the authentication by means of the node interface module and/or the processing module can achieve the advantage of increasing security as the node only acts in providing data for authentication, but does not perform the authentication itself and thus, protect against a compromised node.

The processing module and/or the node interface module can be configured to receive the applicant data when the applicant and/or the node is/are authenticated. This achieves the advantage of increasing the chance of receiving legitimate applicant data, due to the applicant and/or node being authenticated for applicant data transmission, respectively interaction with the node interface module and/or the processing module.

The node interface module can be integrated with the processing module. This achieves the advantage of integrating the loan application process into a platform familiar to the applicant. In particular, the loan application process provided via the processing module can be integrated into sales processes and thus increase the efficiency of providing a loan to the applicant.

The processing module can be configured to provide the primary qualification result to the node interface module. This achieves the advantage of the primary qualification result being available for integrated visual presentation via the node interface module to the applicant, respectively the node. In particular, the processing module can provide the primary qualification result instantly and thus increase the efficiency of the loan application as a further qualification may require additional actions by the node, the node interface module and/or the applicant. Reducing the time between steps of the application process can reduce the cost of the application process for each participating entity. Future sales by the applicant may depend on the loan. Thus, decreasing the time interval from the initial loan application to the disbursements of funds can increase revenue of the applicant. Providing instant feedback to each step of the application process may also increase the probability of the loan application completing.

The node interface module can be configured to provide loan application information to the node based on the primary qualification result. The node interface module can transform the primary qualification result into loan application information. The loan application information may be altered according to an information policy, wherein the applicant may be provided with the decision result or the decision result and the reasoning

The node interface module may integrate loan application information into a dashboard configuration accessible to the applicant, in particular accessible via the sales platform. The loan application information may pertain to loan advertisement, presenting a loan opportunity, in particular acquisition of a loan via an intermediary and/or may comprise exemplary loan conditions.

The node interface module can be configured to provide loan application information to the applicant via a communications network to the applicant based on the primary qualification result. This achieves the advantage that the loan application information can be provided to the applicant via alternative means to reach applicants that may review information provided via the node interface module infrequently.

The processing module can comprise a frontend function section which is configured to communicate with the node and/or the node interface module. The frontend function section can be configured as an interface between the node and/or the node interface module to receive and provide data. The frontend function section can be logically separated from functions pertaining to the applicant data evaluation and/or data acquisition from external modules. The frontend can represent a user interface configured to be accessible by the node and/or the node interface module, wherein data can be provided to the processing module via the frontend function section.

The node and/or the node interface module can be configured to initiate a communication session with the frontend function section based on the loan application information. This achieves the advantage that the applicant can interact directly with the frontend function section via the node, respectively the node interface module. The communication session can be embedded into the platform as an integrated, respectively nested module. Alternatively, the communication session can be realized via a stand-alone session separate from modules of the platform.

The frontend function section can be configured to request and receive further applicant data from the node and/or the node interface module. This achieves the advantage that a loan application session can be initiated based on a minimal set of applicant data and any further required information can be acquired during the loan application session. The minimal set of applicant data can be readily available from the data module and or provided by the applicant via the node or node interface module.

The frontend function section can be configured to access the data module to retrieve secondary applicant data. This achieves the advantage that required secondary applicant data may not need to be provided by the applicant, but may conveniently be retrieved from the data module. Furthermore, the secondary applicant data may be required to proceed with the loan application and the applicant may not be able to provide the secondary applicant data or the applicant can only provide the secondary applicant data with substantially more effort.

The frontend function section and/or the processing module can be configured to query and receive acceptance data from the node and/or the node interface module.

Acceptance data may comprise opting in by the applicant to at least one of the following items:
- compulsory terms and conditions;
- performing further background checks on applicant, respectively a company represented by the applicant, when the applicant provides company information as part of the applicant data and is a representative of the company;
- Customer information & Data Processing according to data privacy regulations
- Providing tax residency information
- Providing a tax ID
- Performing a check to exclude strawman applications

The acceptance data may be requested as a check list, where the applicant provides a marked checklist as acceptance data via the node to the frontend function section and/or the processing module. The processing module may set a subset of non-optional acceptance data elements, wherein the loan application may fail when the applicant does not opt in to at least one non-optional acceptance data element.

The processing module can be configured to process any data provided to and/or received by the frontend function section. Thus, the frontend function section can act as a transceiver for the processing module and/or manage any incoming and outgoing data transfer. This achieves the advantage that the processing module can be shielded from external access, in particular direct access of the applicant.

The frontend function section can be provided via an application programming interface (API). This achieves the advantage that the frontend function section can be integrated into existing modules of a platform. A customizable user interface may be provided as an application layer to the applicant via the node or the node interface module, wherein the customizable user interface can utilize the API-function of the frontend function section to access the processing module. This can achieve the advantage of obscuring the presence of the processing module. In particular a seamless integration into the platform can be achieved, so as to transfer the familiarity of the applicant with the platform to execute sales to the loan application process.

The frontend function section and/or the processing module can be configured to process the secondary applicant data to generate a request for receiving applicant data from an applicant data provider. The applicant data provider can be a third-party data acquisition service providing applicant data pertaining to existing applicant obligations, previous applicant obligations, contracts and/or outstanding debt. For example, the applicant data provider can be a credit agency, scoring agency and/or commercial register.

The applicant data provider, may provide a score pertaining to the trustworthiness and/or credibility of the applicant. Based on the applicant data and/or secondary applicant data the processing module can assess which applicant data elements are required to proceed with the loan application. Instead of requesting these applicant data elements from the applicant itself they can be retrieved from an applicant data provider. The applicant may consent to the request issued by the frontend function section and/or the processing module to the applicant data provider. This achieves the advantage that minimal information is required to be provided by the applicant to advance the loan application.

The frontend function section can be configured to validate the secondary applicant data based on the applicant data received from the applicant data provider. This achieves the advantage of increasing the credibility of the provided information, respectively trust in the applicant. The processing module can be configured to determine an applicant score of the applicant based on the validated secondary applicant data and to compare the applicant score with an applicant score threshold, wherein the loan application can proceed when the applicant score exceeds or is equal to the applicant score threshold. The applicant threshold may vary depending on the loan conditions, the platform the loan is linked to and/or the lender providing the loan.

The processing module can be configured to generate a secondary qualification result based on applicant data provided to the frontend function section. The secondary qualification can be based on the primary qualification determined by the node interface module. The secondary qualification may include verification of at least one of the primary qualification elements. Verification can be achieved by acquiring applicant data from sources inaccessible to the platform. For the secondary qualification to succeed a company represented by the applicant may need to be registered in a predetermined jurisdiction, wherein the jurisdiction parameter can be provided as a country code according to an ISO standard, in particular (ISO 3166). The secondary qualification may further depend on a merchant category code (i.e., MCC according to ISO 81245) of the applicant, wherein the loan needs to be accessible a company with the provided MCC. Furthermore, the secondary qualification can depend on the minimum time of active business operation exceeding a respective threshold value. The predetermined minimum threshold value may preferably be a number of months, i.e., a minimum of 3 months, a minimum of 24 months and more preferably a minimum of 6 months of active business operation. The secondary qualification can depend on the applicant providing applicant data to verify the status as a legal representative - capable of applying for the loan on behalf of a company.

The frontend function section can be configured to provide the secondary qualification result to the node and/or the node interface module. This achieves the advantage of providing information regarding the loan application process to the applicant. Providing the secondary qualification can initiate a further dialog to receive further applicant data to advance the loan application.

The frontend function section can be configured to provide failure data to the node and/or the node interface module to indicate why the secondary qualification result is negative. This achieves the advantage of providing the applicant with the opportunity to remedy elements of the provided applicant data or choose different loan options to achieve a positive secondary qualification.

The processing module can be configured to generate a loan option comprising a plurality of loan conditions, wherein the processing module can be configured to adjust the loan conditions based on the secondary applicant data. This achieves the advantage that the processing module can automatically adjust the loan offer to increase the likelihood of a positive secondary qualification. The adjustments can be provided to the applicant via the node interface module and/or the node for acceptance, respectively review.

The secondary applicant data can comprise sales data, wherein the sales data pertains to sales executed by the applicant, in particular sales executed on the platform. This achieves the advantage that the loan application can be granted based on the prospective income of the applicant. In particular, a likelihood of repayment determined by the processing module can be based on the history of sales volume and revenue.

The node interface module can be configured to store data on sales executed via the platform as secondary applicant data in the data module. This achieves the advantage of building a database of sales data to be provided to the processing module to complete a loan application.

The processing module can be configured to provide the generated loan option to the node and/or the node interface module for review. This achieves the advantage of the applicant being able to review the generated loan option. The applicant may accept the generated loan offer to proceed with the loan application based on the generated loan option.

The processing module can be configured to generate a plurality of loan options, each loan option comprising a plurality of loan conditions, wherein the loan options differ in at least one loan condition with respect to one another. This provides the advantage of increasing the likelihood for a successfully completed loan application as the applicant can choose a loan option according to their preferences and/or requirements. Providing loan options further increases the efficiency of the loan application process as choosing from a plurality of loan options comprising predetermined loan conditions increases comparability and thus, decreases the

The node can be configured to select a loan option from the plurality of loan options based on an applicant input. Thereby, the advantage can be achieved, that the applicant can choose a loan option to proceed via the node. The selection can be provided to the processing module to continue with the loan application process. Any further qualification of the applicant can be performed in view of the selected loan option. In particular, threshold values of further qualification steps can be adjusted according to the selected loan option, i.e., selecting a loan comprising a maximum loan amount may require higher threshold values pertaining to a credit score, periodic sales revenue or other checks compared to another loan option comprising a lower than maximum loan amount.

The node can be configured to modify a loan option and provide the modified loan option as the selected loan option to the processing module. The node can comprise a loan modification interface to allow the adjustment of loan conditions within predefined parameter boundaries. In particular the node can comprise turn elements, slider elements, numerical elements wherein each element can be associated with a loan condition and wherein the applicant can modify the value of the loan condition by adjusting the respective element.

The plurality of loan options can comprise a minimum loan option and a maximum loan option, wherein the minimum loan option comprises a loan condition value set to a minimum allowable value and wherein the maximum loan option comprises the loan condition value set to a maximum allowable value. The loan condition value can be a loan amount, a loan fee, a repayment interval, final repayment date, repayment mode (i.e., percentage of sales for repayment, fixed periodical amount). For example, the minimum and maximum loan options achieve the advantage of providing loan options which either minimize the obligations of repayment for the applicant or maximize the loan amount, the repayment interval.

The node can be configured to generate a customized loan option, wherein the customized loan option comprises loan condition values within the boundaries set by the minimum allowable values of the minimum loan option and the maximum allowable values of the maximum loan option. This achieves the advantage that the customized loan can be automatically approved when the applicant qualifies since a loan conditions within a set of predefined limits can be pre-approved. Furthermore, any combination of loan condition values wherein each loan condition value is set between its respective predefined limits can be a valid loan option which can qualify for automatic disbursement of funds when the applicant qualifies.

The plurality of loan options can comprise a midrange loan option which comprises at least one loan condition value substantially equal to the mean of the minimum and the maximum of the respective loan condition value provided in the remaining loan options, in particular the minimum loan option and maximum loan option. The midrange loan option can balance the expectations of the applicant regarding the loan amount and loan conditions and the requirements of the lender to maximize the likelihood of timely repayment and full repayment of the loan.

The processing module can be configured to provide a user interface to the node, wherein the user interface comprises an adjustment element which is configured to continuously adjust a loan condition value within the limits set by a minimum loan condition value and a maximum loan condition value. Continuous adjustment can be understood as a sufficiently resolved digital adjustment. The respective adjustment resolution can vary depending on the value to be adjusted. For example, the interest rate may preferably be adjusted with 3-digit precision and/or the loan amount may preferably be adjusted with 1-digit precision. Generally, each loan condition value can be adjusted with a 1-digi to 5-digit precision as required.

The node can be configured to provide a selected loan option to the processing module wherein the selected loan option comprises a loan condition value based on an applicant input via the adjustment element. This achieves the advantage that the applicant can customize the loan option and that the processing module can accept the customized loan offer for further processing.

The node can be configured to authorize the processing module to perform a tertiary qualification of the applicant. The tertiary qualification may require the primary qualification and the secondary qualification to succeed. The applicant may consent to further data acquisition by the processing module, respectively the frontend function section, when authorizing the processing module to perform a tertiary qualification of the applicant via the node. Authorization can be achieved by submitting authorization data, in particular in form of a consent form indicating the intent of the applicant to proceed with the loan application.

The processing module can be configured to perform a tertiary qualification of the applicant, wherein the tertiary qualification comprises at least one of the following:
- Identify whether the applicant has other existing access grants and/or loans in progress
- Identify whether the applicant has had a previous access grant and/or loan terminated
- Confirm acceptance of terms and conditions associated with the selected grant and/or loan option
- Receive and evaluate the purpose of the selected loan option

The applicant can submit further applicant data indicating existing loans, previous loans and/or the purpose of the current loan application. Based on this data the processing module can request further loan data from a loan data provider, i.e., a credit agency, a lender, the creditor of an existing loan, respectively a previous loan.

The processing module can be configured to generate a selected set of applicant data based on the applicant data received from the applicant data provider and/or secondary applicant data, and to provide the selected set of applicant data to the node. The selected set of applicant data can comprise applicant data available from the platform (ISV) and applicant data provided by an applicant data provider.

The node can be configured to validate the selected set of applicant data and/or to modify and/or amend the selected set of applicant data prior to validating it. This achieves the advantage of creating transparency regarding the data the loan application decision will be based on. Validating the applicant data may be validated by the applicant via the node by means of indicating that the selected set of applicant data is correct. The selected set of applicant data may data may comprise personal data, business data, third party legal representation confirmation, additional stakeholders, ultimate beneficial owners (UBOs), Bank account data, credit bureau data, scoring data, social media data and/or customer reviews and ratings. Qualification of the applicant may further depend on the number of returned goods, reversals of transactions, the product category of products offered for sale and/or the ratio of completed sales versus retour items.

The processing module can be configured to receive social media data from a social media platform, wherein the social media data can comprise statistical data pertaining to the use, visibility, reputation and/or marketability of the applicant. The social media data can also comprise customer evaluations. Furthermore, the node interface module and/or the platform can provide customer evaluation data pertaining to sales executed by the applicant on the platform.

The node can be configured to authorize the processing module to perform a fourth qualification based on the selected set of applicant data. The fourth qualification can be the final qualification which renders the applicant eligible for the loan. Each qualification may require direct consent of the applicant to be performed. By authorizing the processing module to perform the fourth qualification the applicant can consent via the node to providing additional applicant data and/or consent to the processing module receiving further applicant data from external modules.

The processing module can be configured to receive credentials of at least one entity declared in the selected set of applicant data, check the at least one entity against a set of exclusion rules, receive at least one credit score and/or compare the at least one credit score with a credit score threshold value to generate the fourth qualification.

Credentials can be provided by the applicant via the node. Alternatively, the processing module can be configured to request verification from external modules which provide trusted credentials regarding the named entities. The set of exclusion rules may, for example, comprise a politically exposed person screening (PEP-screening) and/or media screening on reputation risks. The PEP-screening can fulfill regulatory requirements pertaining to sanctions list monitoring.

The node can be configured to provide a verification document to the processing node. This achieves the advantage that credentials can be verified without delays as the verification document can be directly transferred to and evaluated by the processing module.

The verification document can comprise credentials of an entity named in the selected set of applicant data and wherein the processing module is configured to validate the verification document and in turn the entity it pertains to. Thereby, the advantage can be achieved that relevant entities and their relation to one another can be verified. Validating the document can comprise checking the authenticity of the document and/or the content of the document, i.e., issue date, issuing authority, matching content regarding the named entity.

The processing module can be configured to control a step-based applicant data retrieval via the user interface displayed on the node. This achieves the advantage that the minimum required applicant data can be requested. In particular, only the data required for each qualification step may be requested prior to performing the respective qualification. Further data may be requested when the previous qualification succeeded to perform the next qualification.

The node can be configured to provide banking information based on an input by the applicant to the processing module and/or to authorize the processing module to access a bank account based on the banking information. By accessing the bank account, the processing module can retrieve current and/or past balances to evaluate the cash flow of the applicant and whether the cash flow supports the selected loan option, respectively whether it is likely that the repayment target set in the loan conditions can be met.

The processing module can be configured to access a banking account based on the provided banking information. Accessing the banking account can comprise issuing a request to receive bank account statements to a bank account access (X2A) provider and receiving bank account statements from the X2A provider. The processing module can evaluate the bank account statements received from the X2A provider. Receiving the bank account statements via proxy of the X2A provider achieves the advantage that the processing module does not need to be authorized to access the bank account by itself and can instead task an authorized X2A service provider.

The node can be configured to authorize the processing module for receiving a credit score via a credit score entity and wherein the processing module is configured to receive a credit score of the applicant from a credit score entity and to further qualify the applicant based on the received credit score. The processing module can be configured to normalize the received credit score according the type of credit score agency and the relevancy of the received credit score with respect to the loan application. Further, the processing module may integrate the received credit score into an internal rating of the applicant. This can also provide the advantage that the required credit score does not need to be provided by the applicant. The applicant merely needs to provide authorization to the processing module acquire the credit score directly from the credit score provider.

The processing module can be configured to receive loan data from the X2A provider. The loan data can comprise information on existing loans of the applicant and to further qualify the applicant based on the received loan data. The loan data can comprise periodic loan repayments to existing loans. The processing module can be configured to compare the loan data with loan data threshold values and qualify the applicant when the loan data threshold values are not exceeded.

The processing module can be configured to evaluate if the bank account balance supports the selected loan option and/or to compare the received credit score against a threshold credit score for the selected loan option and to evaluate if existing loans support the selected loan option to further qualify the applicant for receiving the selected loan option. This achieves the advantage that the current loan application can be evaluated with regard to existing obligations of the applicant and/or the current overall financial standing of the applicant according to the received credit score.

The processing module can be configured to receive at least one score and to determine an applicant score based on the applicant data, secondary applicant data and/or the at least one score. The processing module can further be configured to modify a set of parameters for determining the applicant score according to requirements of the platform and/or according to requirements of an access provider, respectively lender. This can achieve the advantage of generating an individualized score pertaining to the current loan application and to weight the received score with respect to other data elements, in particular further scores. The received score can be a credit score.

The processing module can be configured to provide a binary qualification result indicating the acceptance of the applicant for the selected loan option to the node and/or the node interface module. This achieves the advantage of efficiently providing the current status of the loan application to the applicant, wherein the applicant can receive the binary qualification embedded in a user interface displayed at the node a. a dashboard of the platform and/or by accessing the node interface module.

The processing module can be configured to receive applicant identification data from an identification provider. Thereby, the identity of the applicant can be confirmed.

The processing module can be configured to link the node to an identification provider which can be configured to generate application identification data and to provide the applicant identification data to the processing module. The applicant identification data can, for example, be generated via a video ident method, a photo ID method, a digital certificate verification method, a digital identification document or any anti money laundering identification confirmation procedure.

The processing module can be configured to comply with anti-money laundering measures based on the received applicant identification data.

The processing module can be configured to generate a set of entities from the provided applicant data, to receive identification data for each entity of the set of entities and to verify that for each entity of the set of entities identification data is received. This achieves the advantage of verifying the identity of each entity which can be a requirement to proceed with the loan application.

The processing module can be configured to provide status data to the node, wherein the status data comprises identification status information stating which entities are successfully identified via the received identification data. Furthermore, the processing module can request an electronic signature from the node and/or the node interface module, wherein the electronic signature can be provided by the applicant through the node. The processing module can be configured to evaluate the status, respectively the validity of the electronic signature. The electronic signature of the applicant can be provided to sign the loan documents according to the selected loan option.

The processing module can be configured to provide confirmation data to the node when all data requirements pertaining to the loan option are met.

The processing module can be configured to access a loan module and to transfer funds from the loan module to an applicant module. This achieves the advantage of providing funds according to the loan to the applicant.

The loan module can be inaccessible to the applicant and the applicant module can accessible by the applicant to withdraw funds. This achieves the advantage that the processing module can retain control regarding outgoing payments and/or incoming payments from the platform as any transfer of funds can be managed via the loan module.

The processing module can be configured to disburse a predetermined amount of funds from the loan module to the applicant module and/or the applicant. In particular, disbursing the funds can be based on the selected loan option the applicant is qualified for. When the qualification of the applicant for the loan option is complete, the loan can be automatically taking effect as the loan conditions can be preauthorized by the lender. Thus, the processing module can directly acquire funds from the lender and at least partially disburse these funds to the applicant.

The loan module can be associated with a banking entity and the processing module can be configured to request a transfer of funds according to the selected loan option from the banking entity to the loan module. The banking entity can generally a provider of funds, wherein the banking entity can provide a set of criteria to be met in accordance to provide a loan to an applicant.

The processing module can be configured to determine a plurality of fees based on the loan option the applicant qualified for, and to add the plurality of fees to a loan amount of the loan option. The processing module can further be configured to disburse each fee of the plurality of fees to a respective fee receiving entity. This achieves the advantage of automatically distributing fees according to the agreed loan. In particular a fee to entities participating in the granting, disbursing or facilitating the loan can receive a fee.

The processing module can be configured to disburse a fee, wherein the fee is determined according to a loan condition of the loan, and wherein the processing module is configured to divide the fee prior to disbursing to split the fee between at least two separate entities. For example, the fee can be divided into an origination fee based and a payback fee. The origination fee can depend on the loan amount.

The processing module is configured to add the payback fee and/or the origination fee to the initial loan amount, wherein the initial loan amount is transferred to the loan module, wherein the required repayment balance is the sum of the payback fee and/or the origination fee and the initial loan amount. Thus, the processing module can limit the maximum amount of funds disbursed to the applicant to the initial funds minus the payback fee and/or the origination fee.

The processing module can be configured to add the payback fee and the origination fee at least one fee to receive a total fee amount. The processing module can be configured to determine a plurality of commissions based on the total fee amount and/or the loan conditions. In particular, the processing module can be configured to calculate a bank commission, a secondary commission and/or a tertiary commission based on the loan conditions and/or the total fee amount.

The processing module can be configured to split the total fee amount according to predetermined percentages between the plurality of commissions. In particular, the total fee amount can be split according to predetermined percentages between the bank commission, the secondary commission and/or the tertiary commission.

The processing module can be configured to transfer the bank commission to the bank or to grant the bank access to retrieve the bank commission from the loan module. Thus, the bank providing the loan can receive a commission associated with the loan.

The processing module can be configured to calculate a secondary commission based on the loan conditions and to transfer the secondary commission to an intermediary entity or to grant the intermediary entity access to retrieve the secondary commission from the loan module. The intermediary entity can be a provider of the processing module, respectively the integrated and automated loan application process according to the system of the invention. The intermediary entity may execute administrative control over the system, in particular the processing module and thereby the loan application process. The intermediary may further provide the node interface module, wherein the node interface module can be integrated into a sales platform.

The processing module can be configured to calculate a tertiary commission based on the loan conditions and to transfer the tertiary commission to a platform entity or to grant the platform entity access to retrieve the secondary commission from the loan module. The platform entity can provide the sales platform, wherein the applicant executes sales via the sales platform. The platform entity may execute administrative control over the sales platform and thereby the sales executed by the applicant.

The node interface module can be configured to process the sales data, determine the required loan repayment and /or send sales data of sales performed by the applicant via the platform to a monetization module and to receive payments on the basis of the sales data from the monetization module. The sales data can be available to the monetization module via the data module. The monetization module can execute payments pertaining to sales performed by the applicant via the platform and transfer funds accordingly.

The node interface module can be configured to send payments to the applicant module based on sales performed by the applicant via the platform. Thereby, control over the disbursement of received payments from sales can be transferred to the processing module. Thereby, loan repayments can automatically be deducted from the incoming payments. The applicant may consent to the handling of incoming payments by the processing module.

The processing module can be configured to instruct the monetization module to send payments to the loan module based on sales performed by the applicant via the platform.

The processing module can be configured to monitor the loan module for incoming and/or outgoing payments. The processing module can determine whether sufficient repayment is taking place or can be achieved. Furthermore, the processing module can generate a forecast pertaining to the likelihood if the loan will be repaid according to the loan conditions. Furthermore, the processing module can be configured to issue a notification to the node interface module and/or the node if the current repayment and/or recorded repayments predict a timely loan repayment and/or to issue a notification to the node interface module and/or the node when the received repayments are below a repayment threshold according to the loan conditions.

The processing module can be configured to determine a deduction from the payments on the basis of the loan condition and to transfer the deduction to repay the loan. The payments can initially remain at the monetization module and the processing module can send instructions to the monetization module pertaining to the partial transfer to an intermediary entity and a further partial transfer to the applicant. In particular, no separate account for payment management is required when the deduction of repayment rates is executed at the monetization module.

The processing module can be configured to calculate a deduction from incoming payments to the loan module from the monetization module based on the loan conditions of the selected loan option. Thus, the advantage of automatic loan repayment can be achieved as the loan repayment is automatically deducted from incoming revenue of the applicant. The processing module can provide information pertaining to the executed deductions to the node interface module and/or the node for review by the applicant.

The system can comprise an applicant module, wherein the processing module can be configured to determine a deduction when payments are received at the loan module from the monetization module and to deduct the deduction from payment transfers to the applicant module based on the loan conditions of the selected loan option. Thus, receiving payments from the monetization module and transferring funds to the applicant can be decoupled. In particular, funds may be transferred periodically to the applicant. Furthermore, incoming payments may be accumulated at the loan module and the corresponding deductions determined periodically.

The processing module can be configured to transfer the deduction from the loan module to the bank or to grant the bank access to retrieve the bank commission from the loan module.

The processing module can be configured to transfer deductions from a plurality of incoming applicant sales payments and/or a plurality of active loans to the loan module. Therefore, the loan module can represent an accumulation account for centralized handling of funds by the processing module. In particular, a plurality of loans of one applicant can be managed jointly.

The loan module can comprise a plurality of virtual accounts, wherein each virtual account represents an active loan and/or an applicant, and wherein the processing module can be configured to assign a calculated deduction to a respective virtual account of the plurality of virtual accounts and transfer the deduction to that respective virtual account.

The processing module can be configured to monitor the loan repayment according to the loan conditions of the disbursed loan. This achieves the advantage that any deviation from the loan repayment according to the loan conditions can be registered and a response action and/or notification can be generated. The applicant can be notified.

The processing module is configured to monitor if payments provided by the monetization module are sufficient to fulfill the loan condition, and wherein the processing module is further configured to generate a loan fulfillment forecast based on the payments, wherein the loan fulfillment forecast comprises a likelihood for repayment of the loan within the parameters of the loan condition.

The processing module can be configured to periodically compare incoming repayments against a minimum repayment threshold. The minimum repayment threshold can be defined by the loan conditions. When the minimum repayment threshold is breached, the processing module can issue a corresponding notification to the node interface module and/or the node.

A minimum repayment threshold can be set for each loan and remains constant throughout the term of the loan and is reviewed when regular checkpoints are reached (i.e., for a loan term of 12 months, it may be required that 1/12 of the full loan is repaid every 2 months).

The applicant may experience fluctuations in revenues and thus, repayments may be below a set target repayment as long as they do not breach the minimum repayment threshold.

Configuration of a percentage of the loan is allowed to set the minimum repayment threshold for triggering a notification. The value may be defined according to the scheduled loan checkpoints (i.e., monthly / bi-monthly / quarterly). Checkpoints can be evenly distributed over the duration of the loan from the beginning of the repayment period. When the running total of repayments is below the minimum loan repayment threshold value when a defined checkpoint is reached, a notification can be generated.

The processing module can be configured to determine a likelihood value for complete loan repayment by extrapolating a repayment trend based on the recorded loan repayments.

The processing module can be configured to determine a likelihood value for complete loan repayment based on secondary applicant data, more specifically based on the history of received payments during a predetermined time interval.

When the likelihood for full loan repayment at the end of the term falls below a respective threshold value the processing module can generate a warning indicator of whether repayments show a trend that could jeopardize full repayment of the loan at maturity.

For example, the indicator can be generated at a pre-set time, preferably 90 days, before the maturity of the loan associated with the outstanding amount of the loan to be repaid. Issuing the notification can be based on configurable parameters (i.e., number of days before the end of the loan term, threshold percentage of outstanding repayments. This can specify which repayments must be repaid by a certain date).

The processing module can be configured to issue a notification to the node, to the node interface module, the lender and/or the applicant when the minimum repayment threshold is breached. This achieves the advantage of implementing a dunning system to ensure that the repayment target is met. In particular, the loan can be fulfilled when measures are taken to increase the repayments to meet the loan conditions (i.e., manual payments by the applicant, an automatic increase of repayment percentage of the incoming sales). Issuing the notification timely can increase the likelihood of meeting the targeted complete loan repayment date.

The processing module can be configured to provide repayment data to the monetization module and to instruct the monetization module to deduct a repayment amount from incoming applicant sales payments and to transfer the repayment amount to the loan module. This achieves the advantage of not requiring a separate bank account to handle incoming payments and the respective repayment reduction. Splitting the incoming payments into an applicant fraction and a repayment fraction can be realized at the monetization module.

The processing module can be configured to instruct the monetization module to disburse the remaining funds of the incoming applicant sales payments to the applicant, preferably to the applicant module. Thus, the loan repayment can be achieved automatically without interaction of the applicant or the lender. Information regarding the amount transferred with each deduction can be provided to the applicant, intermediary and/or lender.

The invention is further described with the following numbered embodiments.

Below, system embodiments will be discussed. These embodiments are abbreviated by the letter "S" followed by a number. Whenever reference is herein made to "system embodiments", these embodiments are meant.
S1. System for automatic security evaluation, the system comprising a processing module (1) configured to receive applicant data and to qualify the applicant for receiving access to a resource.
S2. System according to the preceding embodiment, wherein the processing module (1) is configured to generate an applicant score based on the received applicant data and to compare the applicant score with a score threshold and to qualify the applicant for access to the resource when the applicant score exceeds the score threshold.
S3. System according to any of the preceding embodiment, wherein the processing module (1) is configured to adjust hardware settings according to the received applicant data.
S4. System according to any of the preceding embodiments, wherein the processing module (1) is configured to grant limited resource access to the applicant according to the received applicant data.
S5. System according to any of the preceding embodiments wherein the processing module (1) is configured to generate a resource access condition, in particular a loan condition, based on the received applicant data.
S6. System according to any of the preceding embodiments, wherein the processing module (1) is configured to receive and process loan data and to generate a loan based on the applicant data and the loan data.
S7. System according to any of the preceding embodiments further comprising a node (2), wherein the node (2) is configured to receive the applicant data in form of an applicant input and/or wherein the processing module (1) is configured to receive applicant data from the node (2).
S8. System according to any of the preceding embodiments with the features of S7, wherein the node (2) is configured to communicate with the processing module (1).
S9. System according to any of the preceding embodiments with the features of S7, wherein the node (2) is configured to authenticate an applicant to the processing module (1).
S10. System according to any one of the preceding embodiments with the features of S7, further comprising a node interface module (3) being configured to communicate with the node (2) and to receive the applicant data.
S11. System according to any of the preceding embodiments with features of S10, wherein the node (2) is configured to execute a dashboard application configured to display data received from the node interface module (3) and to send data to the node interface module (3).
S12. System according to any one of the preceding embodiments with the features of S10, wherein the node interface module (3) is configured to determine an eligibility of the applicant based on the received applicant data.
S13. System according to any one of the preceding embodiments with the features of S10, wherein the node interface module (3) is configured to receive secondary applicant data and to generate a primary qualification result based on the received secondary applicant data.
S14. System according to any one of the preceding embodiments with the features of S10, wherein the node interface module (3) is configured to provide the secondary applicant data to the processing module (1), which is configured to generate a primary qualification result based the secondary applicant data.
S15. System according to any one of the preceding embodiments comprising a data module (4) configured to store and/or to provide applicant data, applicant sales data and/or secondary applicant data.
S16. System according to any of the preceding embodiments with features of S15, wherein the processing module (1) is configured to qualify the applicant for receiving a loan including the loan condition on the basis of the applicant data and secondary applicant data.
S17. System according to any one of the preceding embodiments with features of S10 and S15, wherein the node interface module (3) is configured to access the data module (4) to store and/or receive applicant data and/or secondary applicant data.
S18. System according to any of the preceding embodiments, wherein the processing module (1) is configured to receive sales data of platform sales performed by the applicant via the node interface module (3) from the data module (4).
S19. System according any of to the preceding embodiments with features of S10, wherein the node (2) is configured to authenticate an applicant to the node interface module (3).
S20. System according to any of the preceding embodiments with the features of S10, wherein the node interface module (3) and/or the processing module (1) is/are configured to authenticate the applicant and/or the node (2) by means of authentication provided by the node (2).
S21. System according to any of the preceding embodiments with the features of S20, wherein the processing module (1) and/or the node interface module (3) is/are configured to receive the applicant data when the applicant and/or the node (2) is/are authenticated.
S22. System according to any of the preceding embodiments with the features of S10, wherein the node interface module (3) is integrated with the processing module (1).
S23. System according to any of the preceding embodiments with features of S10, wherein the processing module (1) is configured to provide the primary qualification result to the node interface module (3).
S24. System according to any of the preceding embodiments with features of S14 or S23, wherein the node interface module (3) is configured to provide loan application information to the node (2) based on the primary qualification result.
S25. System according to any of the preceding embodiments with features of S14 or S23, wherein the node interface module (3) is configured to provide loan application information to the applicant via a communications network to the applicant based on the primary qualification result.
S26. System according to any of the preceding embodiments with features of S10, wherein the processing module (1) comprises a frontend function section (5) which is configured to communicate with the node (2) and/or the node interface module (3).
S27. System according to any of the preceding embodiments with features of S26, wherein the node (2) and/or the node interface module (3) is/are configured to initiate a communication session with the frontend function section (5) based on the loan application information.
S28. System according to any of the preceding embodiments with features of S26, wherein the frontend function section (5) is configured to request and receive further applicant data from the node (2) and/or the node interface module (3).
S29. System according to any of the preceding embodiments with features of S26, wherein the frontend function section (5) is configured to access the data module (4) to retrieve secondary applicant data.
S30. System according to any of the preceding embodiments with features of S26, wherein the frontend function section (5) is configured to query and receive acceptance data from the node (2) and/or the node interface module (3).
S31. System according to any of the preceding embodiments with features of S26, wherein the processing module (1) is configured to process any data provided to and/or received by the frontend function section.
S32. System according to the preceding embodiment, with features of S26, wherein the frontend function section is provided via an application programming interface (API) .
S33. System according to any of the preceding embodiments with features of S29, wherein the frontend function section (5) is configured to process the secondary applicant data to generate a request for receiving applicant data from an applicant data provider (6).
S34. System according to any of the preceding embodiments with features of S33, wherein the frontend function section (5) is configured to validate the secondary applicant data based on the applicant data received from the applicant data provider (6).
S35. System according to any of the preceding embodiments with features of S26, wherein the processing module (1) is configured to generate a secondary qualification result based on applicant data provided to the frontend function section (5).
S36. System according to any of the preceding embodiments with features of S26, wherein the frontend function section (5) is configured to provide the secondary qualification result to the node (2) and/or the node interface module (4).
S37. System according to any of the preceding embodiments with features of S26, wherein the frontend function section (5) is configured to provide failure data to the node (2) and/or the node interface module (4) to indicate why the secondary qualification result is negative.
S38. System according to any of the preceding embodiments, wherein the processing module (1) is configured to generate a loan option comprising a plurality of loan conditions, wherein the processing module (1) is configured to adjust the loan conditions based on the secondary applicant data.
S39. System according to any of the preceding embodiments with features of S38, wherein the secondary applicant data comprises sales data, wherein the sales data pertains to sales executed by the applicant.
S40. System according to any of the preceding embodiments with features of S39, wherein the node interface module (3) is configured to store data on sales executed via the platform as secondary applicant data in the data module (4).
S41. System according to any of the preceding embodiments with features of S38, wherein the processing module (1) is configured to provide the generated loan option to the node (2) and/or the node interface module (3) for review.
S42. System according to any of the preceding embodiments with features of S38, wherein the processing module (1) is configured to generate a plurality of loan options, each loan option comprising a plurality of loan conditions, wherein the loan options differ in at least one loan condition with respect to one another.
S43. System according to any of the preceding embodiments with features of S42, wherein the node (2) is configured to select a loan option from the plurality of loan options based on an applicant input.
S44. System according to any of the preceding embodiments with features of S42, wherein the node (2) is configured to modify a loan option and provide the modified loan option as the selected loan option to the processing module (1).
S45. System according to any of the preceding embodiments with features of S42, wherein the plurality of loan options comprises a minimum loan option and a maximum loan option, wherein the minimum loan option comprises a loan condition value set to a minimum allowable value and wherein the maximum loan option comprises the loan condition value set to a maximum allowable value.
S46. System according to any of the preceding embodiments with features of S45, wherein the node (2) is configured to generate a customized loan option, wherein the customized loan option comprises loan condition values within the boundaries set by the minimum allowable values of the minimum loan option and the maximum allowable values of the maximum loan option.
S47. System according to any of the preceding embodiments with features of S45, wherein the plurality of loan options comprises a midrange loan option which comprises at least one loan condition value substantially equal to the mean of the minimum and the maximum of the respective loan condition value provided in the remaining loan options, in particular the minimum loan option and maximum loan option.
S48. System according to any of the preceding embodiments with features of S45, wherein the processing module (1) is configured to provide a user interface to the node (2), wherein the user interface comprises an adjustment element which is configured to continuously adjust a loan condition value within the limits set by a minimum loan condition value and a maximum loan condition value.
S49. System according to any of the preceding embodiments with features of S48, wherein the node (2) is configured to provide a selected loan option to the processing module (1) wherein the selected loan option comprises a loan condition value based on an applicant input via the adjustment element.
S50. System according to any of the preceding embodiments with features of S7, wherein the node is configured to authorize the processing module (1) to perform a tertiary qualification of the applicant.
S51. System according to any of the preceding embodiments with features of S50, wherein the processing module (1) is configured to perform a tertiary qualification of the applicant, wherein the tertiary qualification comprises one of the following:
   - Checking for active access grants, respectively loans
   - Checking for previous access grant terminations, respectively loan terminations
   - Confirming the acceptance of terms and conditions associated with the selected grant options, respectively selected loan option
   - Receive and evaluate the purpose of the selected loan option.
S52. System according to any of the preceding embodiments with features of S34, wherein the processing module (1) is configured to generate a selected set of applicant data based on the applicant data received from the applicant data provider (6) and/or secondary applicant data, and to provide the selected set of applicant data to the node (2).
S53. System according to any of the preceding embodiments with features of S52, wherein the node (2) is configured to validate the selected set of applicant data and/or to modify and/or amend the selected set of applicant data prior to validating it.
S54. System according to any of the preceding embodiments with features of S7, wherein the node (2) is configured to authorize the processing module (1) to perform a fourth qualification based on the selected set of applicant data.
S55. System according to any of the preceding embodiments with features of S54, wherein the processing module (1) is configured to perform the fourth qualification based on the selected set of applicant data.
S56. System according to any of the preceding embodiments, with features of S55, wherein the processing module (1) is configured to receive credentials of at least one entity declared in the selected set of applicant data, check the at least one entity against a set of exclusion rules, receive at least one credit score and/or compare the at least one credit score with a credit score threshold value to generate the fourth qualification.
S57. System according to any of the preceding embodiments with features of S7, wherein the node (2) is configured to provide a verification document to the processing node (1).
S58. System according to any of the preceding embodiments with features of S53 and S57, wherein the verification document comprises credentials of an entity named in the selected set of applicant data and wherein the processing module (1) is configured to validate the verification document and in turn the entity it pertains to.
S59. System according to any of the preceding embodiments with features of S48, wherein the processing module (1) is configured to control a step-based applicant data retrieval via the user interface displayed on the node (2).
S60. System according to any of the preceding embodiments with features of S7, wherein the node (2) is configured to provide banking information based on an input by the applicant to the processing module (1) and/or to authorize the processing module (1) to access a bank account based on the banking information.
S61. System according to any of the preceding embodiments with features of S60, wherein the processing module (1) is configured to access a banking account based on the provided banking information, wherein accessing the banking account comprises issuing a request to receive bank account statements to a bank account access (X2A) provider (7) and receiving bank account statements from the X2A provider (7).
S62. System according to any of the preceding embodiments with features of S7, wherein the node (2) is configured to authorize the processing module (1) for receiving a credit score via a credit score entity and wherein the processing module (1) is configured to receive a credit score of the applicant from a credit score entity (8) and to further qualify the applicant based on the received credit score.
S63. System according to any of the preceding embodiments with features of S61, wherein the processing module (1) is configured to receive loan data from the X2A provider (7), wherein the loan data comprises information on existing loans of the applicant and to further qualify the applicant based on the received loan data.
S64. System according to any of the preceding embodiments with features of S58, S62 and S63, wherein the processing module (1) is configured to evaluate if the bank account balance supports the selected loan option, and to compare the received credit score against a threshold credit score for the selected loan option and to evaluate if existing loans support the selected loan option to further qualify the applicant for receiving the selected loan option.
S65. System according to any of the preceding embodiments, wherein the processing module (1) is configured to receive at least one credit score and to determine an applicant score based on the applicant data, secondary applicant data and/or the at least one credit score, and wherein the processing module (1) is configured to modify a set of parameters for determining the applicant score according to requirements of the platform and/or according to requirements of a lender.
S66. System according to any of the preceding embodiments with features of S64, wherein the processing module (1) is configured to provide a binary qualification result indicating the acceptance of the applicant for the selected loan option to the node (2) and/or the node interface module (3).
S67. System according to any of the preceding embodiments, wherein the processing module (1) is configured to receive applicant identification data from an identification provider (9).
S68. System according to any of the preceding embodiments with features of S7, wherein the processing module (1) is configured to link the node (2) to an identification provider (9), wherein the identification provider (9) is configured to generate applicant identification data and to provide the applicant identification data to the processing module (1).
S69. System according to any of the preceding embodiments with features of S67, wherein the processing module (1) is configured to comply with anti-money laundering measures based on the received applicant identification data.
S70. System according to any of the preceding embodiments, wherein the processing module (1) is configured to generate a set of entities from the provided applicant data, to receive identification data for each entity of the set of entities and to verify that for each entity of the set of entities identification data is received.
S71. System according to any of the preceding embodiments with features of S10 and S69, wherein the processing module (1) is configured to provide status data to the node (2), wherein the status data comprises identification status information stating which entities are successfully identified via received identification data.
S72. System according to any of the preceding embodiments, wherein the processing module (1) is configured to provide confirmation data to the node when all data requirements pertaining to the loan option are met.
S73. System according to any of the preceding embodiments, wherein the processing module (1) is configured to access a loan module (10) and to transfer funds from the loan module (10) to an applicant module (11) and/or the applicant.
S74. System according to any of the preceding embodiments with features of S73, wherein the loan module (10) is inaccessible to the applicant and wherein the applicant module (11) is accessible by the applicant to withdraw funds.
S75. System according to any of the preceding embodiments with features of S73, wherein the processing module (1) is configured to disburse a predetermined amount of funds from the loan module (10) to the applicant module (11) based on the selected loan option the applicant is qualified for.
S76. System according to any of the preceding embodiments with features of S73, wherein the loan module (10) is associated with a banking entity and wherein the processing module (1) is configured to request a transfer of funds according to the selected loan option from the banking entity to the loan module (10).
S77. System according to any of the preceding embodiments, wherein the processing module (1) is configured to determine a plurality of fees based on the loan option the applicant qualified for, and to add the plurality of fees to a loan amount of the loan option, wherein the processing module (1) is further configured to disburse each fee of the plurality of fees to a respective fee receiving entity.
S78. System according to any of the preceding embodiments, wherein the processing module (1) is configured to disburse a fee, wherein the fee is determined according to a loan condition of the loan, and wherein the processing module (1) is configured to divide the fee prior to disbursing to split the fee between at least two separate entities.
S79. System according to any of the preceding embodiments with features of S76 and S77, wherein the processing module (1) is configured to add the payback fee and/or the origination fee to the initial loan amount, wherein the initial loan amount is transferred to the loan module (10), wherein the required repayment balance is the sum of the payback fee and/or the origination fee and the initial loan amount.
S80. System according to any of the preceding embodiments with the features of S77, wherein the processing module (1) is configured to determine a total fee amount comprising at least one fee, and wherein the processing module (1) is configured to determine a plurality of commissions based on the total fee amount and/or the loan conditions.
S81. System according to any of the preceding embodiments with the features of S80, wherein the processing module (1) is configured to split the total fee amount according to predetermined percentages between the plurality of commissions.
S82. System according to any of the preceding embodiments with the features of S80, wherein the plurality of commissions comprises a bank commission and wherein the processing module (1) is configured to transfer the bank commission to the bank or to grant the bank access to retrieve the bank commission from the loan module (6).
S83. System according to any of the preceding embodiments, wherein the processing module (1) is configured to calculate a secondary commission based on the loan conditions and to transfer the secondary commission to an intermediary or to grant the intermediary entity access to retrieve the secondary commission from the loan module (10).
S84. System according to any of the preceding embodiments with features of S10, wherein the processing module (1) is configured to calculate a tertiary commission based on the loan conditions and to transfer the tertiary commission to a platform entity or to grant the platform entity access to retrieve the secondary commission from the loan module (6).
S85. System according to any of the preceding embodiments with features of S40, wherein the node interface module (3) is configured to process the sales data, determine the required loan repayment and/or send sales data of sales performed by the applicant via the platform to a monetization module (12) and to receive payments on the basis of the sales data from the monetization module (12).
S86. System according to any of the preceding embodiments with features of S40 and S73, wherein the node interface module (3) is configured to send payments to the applicant module (11) based on sales performed by the applicant via the platform.
S87. System according to any of the preceding embodiments with features of S73; wherein the processing module (1) is configured to instruct the monetization module (12) to send payments to the loan module (10) based on sales performed by the applicant via the platform.
S88. System according to any of the preceding embodiments with features of S73, wherein the processing module (1) is configured to monitor the loan module (10) for incoming and/or outgoing payments.
S89. System according to any of the preceding embodiments, wherein the processing module (1) is configured to determine a deduction from the payments on the basis of the loan condition and to transfer the deduction to repay the loan.
S90. System according to any of the preceding embodiments with features of S73, wherein the processing module (1) is configured to determine a deduction from incoming payments to the loan module (10) from the monetization module (12) based on the loan conditions of the selected loan option.
S91. System according to any of the preceding embodiments with features of S73 and comprising an applicant module (11), wherein the processing module (1) is configured to determine a deduction when payments are received at the loan module (10) from the monetization module (12) and to deduct the deduction from payment transfers to the applicant module based on the loan conditions of the selected loan option.
S92. System according to any of the preceding embodiments with features of S89, wherein the processing module (1) is configured to transfer the deduction from the loan module (10) to the bank or to grant the bank access to retrieve the bank commission from the loan module (10).
S93. System according to any of the preceding embodiments with features of S89, wherein the processing module (1) is configured to transfer deductions from a plurality of incoming applicant sales payments and/or a plurality of active loans to the loan module (10).
S94. System according to any of the preceding embodiments with features of S89, wherein the loan module (10) comprises a plurality of virtual accounts, wherein each virtual account represents an active loan and/or an applicant, and wherein the processing module (1) is configured to assign a calculated deduction to a respective virtual account of the plurality of virtual accounts and transfer the deduction to that respective virtual account.
S95. System according to any of the preceding embodiments, wherein the processing module (1) is configured to monitor the loan repayment according to the loan conditions of the disbursed loan.
596. System according to any of the preceding embodiments, wherein the processing module (1) is configured to monitor if payments provided by the monetization module (12) are sufficient to fulfill the loan condition, and wherein
   the processing module (1) is further configured to generate a loan fulfillment forecast based on the payments, wherein the loan fulfillment forecast comprises a likelihood for repayment of the loan within the parameters of the loan condition.
S97. System according to any of the preceding embodiments with the features of S95, wherein the processing module (1) is configured to periodically compare incoming repayments against a minimum repayment threshold
S98. System according to any of the preceding embodiments with the features of S95, wherein the processing module (1) is configured to determine a likelihood value for complete loan repayment by extrapolating a repayment trend based on the recorded loan repayments.
S99. System according to any of the preceding embodiments with the features of S109, wherein the processing module (1) is configured to determine a likelihood value for complete loan repayment based on secondary applicant data, more specifically based on the history of received payments during a predetermined time interval.
S100. System according to any of the preceding embodiments with the features of S97, wherein the processing module (1) is configured to issue a notification to the node (2), to the node interface module (3), the lender and/or the applicant when the minimum repayment threshold is breached.
S101. System according to any of the preceding embodiments, comprising a wherein the processing module (1) is configured to provide repayment data to the monetization module (12) and to instruct the monetization module (12) to deduct a repayment amount from incoming applicant sales payments and to transfer the repayment amount to the loan module (10).
S102. System according to any of the preceding embodiments with features of S101, wherein the processing module (1) is configured to instruct the monetization module (12) to disburse the remaining funds of the incoming applicant sales payments to the applicant, preferably to the applicant module (11).

Below, method embodiments will be discussed. These embodiments are abbreviated by the letter "M" followed by a number. Whenever reference is herein made to "method embodiments", these embodiments are meant.
M1. Method for automatic security evaluation, the method comprising the step of receiving applicant data and qualifying the applicant for receiving access to a resource, respectively a loan.
M2. Method according to the preceding embodiment comprising the step of generating an access condition, respectively a loan condition, based on the received applicant data.
M3. Method according to any of the preceding embodiments comprising the step of receiving and processing loan data and generating a loan based on the applicant data and the loan data.
M4. Method according to any of the preceding embodiments further comprising receiving the applicant data in form of an applicant input by a node (2).
M5. Method according to any of the preceding embodiments comprising the step of authenticating an applicant to a processing module.
M6. Method according to any of the preceding embodiments comprising the step of executing a dashboard application configured to display data received from the node interface module (3) and to send data to the node interface module (3).
M7. Method according to any one of the preceding embodiments comprising the step of determining an eligibility of the applicant based on the received applicant data by the node interface module (3).
M8. Method according to any one of the preceding embodiments comprising the step of receiving secondary applicant data and generating a primary qualification result based on the received secondary applicant data.
M9. Method according to any one of the preceding embodiments comprising the step of providing the secondary applicant data to the processing module (1) by the node interface module (3).
M10. Method according to any one of the preceding embodiments comprising the step of storing applicant data, applicant sales data and/or secondary applicant data by a data module (4).
M11. Method according to any one of the preceding embodiments comprising the step of accessing the data module (4) to store and/or receive applicant data and/or secondary applicant data by the node interface module (3).
M12. Method according any of to the preceding embodiments comprising the step of authenticating an applicant to the node interface module (3).
M13. Method according to any of the preceding embodiments comprising the step of authenticating the applicant and/or the node (2) to the processing module (1) and/or the node interface module (3) by means of authentication provided by the node (2).
M14. Method according to any of the preceding embodiments comprising the step of receiving the applicant data when the applicant and/or the node (2) is/are authenticated by the processing module (1) and/or the node interface module (3).
M15. Method according to any of the preceding embodiments providing the primary qualification result to the node interface module (3) by the processing module (1).
M16. Method according to any of the preceding embodiments comprising the step of providing loan application information to the node (2) based on the primary qualification result by the node interface module (3).
M17. Method according to any of the preceding embodiments comprising the step of providing loan application information to the applicant via a communications network to the applicant based on the primary qualification result by the node interface module (3).
M18. Method according to any of the preceding embodiments comprising the step of initiating a communication session between the node (2) or the node interface module (3) and a frontend function section (5) of the processing module (1) based on the loan application information.
M19. Method according to any of the preceding embodiments comprising the step of requesting and receiving further applicant data from the node (2) and/or the node interface module (3).
M20. Method according to any of the preceding embodiments comprising the step of accessing the data module (4) to retrieve secondary applicant data b< the node interface module (3).
M21. Method according to any of the preceding embodiments comprising the step of querying and receiving acceptance data from the node (2) and/or the node interface module (3).
M22. Method according to any of the preceding embodiments comprising the step of processing any data provided to and/or received by the frontend function section.
M23. Method according to any of the preceding embodiments comprising the step of processing the secondary applicant data to generate a request for receiving applicant data from an applicant data provider (6).
M24. Method according to any of the preceding embodiments comprising the step of validating the secondary applicant data based on the applicant data received from the applicant data provider (6).
M25. Method according to any of the preceding embodiments comprising the step of generating a secondary qualification result based on applicant data provided to the frontend function section (5).
M26. Method according to any of the preceding embodiments comprising the step of providing the secondary qualification result to the node (2) and/or the node interface module (3).
M27. Method according to any of the preceding embodiments comprising the step of providing failure data to the node (2) and/or the node interface module (3) to indicate why the secondary qualification result is negative.
M28. Method according to any of the preceding embodiments comprising the step of generating a loan option comprising a plurality of loan conditions, and adjusting the loan conditions based on the secondary applicant data.
M29. Method according to any of the preceding embodiments comprising the step of executing sales attributed to the applicant and storing data on the executed sales as secondary applicant data in the platform data module (4).
M30. Method according to any of the preceding embodiments comprising the step of providing the generated loan option to the node (2) and/or the node interface module (3) for review.
M31. Method according to any of the preceding embodiments comprising the step of generating a plurality of loan options, each loan option comprising a plurality of loan conditions, wherein the loan options differ in at least one loan condition with respect to one another.
M32. Method according to any of the preceding embodiments comprising the step of selecting a loan option from the plurality of loan options based on an applicant input provided via the node (2).
M33. Method according to any of the preceding embodiments comprising the step of modifying a loan option and providing the modified loan option as the selected loan option to the processing module (1) by the node (2).
M34. Method according to any of the preceding embodiments with features of M32, wherein the plurality of loan options comprises a minimum loan option and a maximum loan option, wherein the minimum loan option comprises a loan condition value set to a minimum allowable value and wherein the maximum loan option comprises the loan condition value set to a maximum allowable value.
M35. Method according to any of the preceding embodiments comprising the step of generating a customized loan option by the node (2), wherein the customized loan option comprises loan condition values within the boundaries set by the minimum allowable values of the minimum loan option and the maximum allowable values of the maximum loan option.
M36. Method according to any of the preceding embodiments, wherein the plurality of loan options comprises a midrange loan option which comprises at least one loan condition value substantially equal to the mean of the minimum and the maximum of the respective loan condition value provided in the remaining loan options, in particular the minimum loan option and maximum loan option.
M37. Method according to any of the preceding embodiments comprising the step of providing a selected loan option to the processing module (1) by the node, wherein the selected loan option comprises a loan condition value based on an applicant input via the adjustment element.
M38. Method according to any of the preceding embodiments comprising the step of authorizing the processing module (1) to perform a tertiary qualification of the applicant.
M39. Method according to any of the preceding embodiments comprising the step of perform inga tertiary qualification of the applicant, wherein the tertiary qualification comprises one of the following:
   - Identify whether the applicant has other existing loans in progress
   - Identify whether the applicant has had a previous loan terminated
   - Confirm acceptance of terms and conditions associated with the selected loan option
   - Receive and evaluate the purpose of the selected loan option
M40. Method according to any of the preceding embodiments comprising the step of generating a selected set of applicant data based on the applicant data received from the applicant data provider (6) and/or secondary applicant data, and providing the selected set of applicant data to the node (2).
M41. Method according to any of the preceding embodiments comprising the step of validating the selected set of applicant data and/or modifying and/or amending the selected set of applicant data prior to validating it.
M42. Method according to any of the preceding embodiments comprising the step of authorizing the processing module (1) to perform a fourth qualification based on the selected set of applicant data.
M43. Method according to any of the preceding embodiments comprising the step of performing the fourth qualification based on the selected set of applicant data, wherein the fourth qualification comprises acquiring credentials of entities declared in the selected set of applicant data and checking these entities against a set of exclusion rules.
M44. Method according to any of the preceding embodiments comprising the step of providing a verification document to the processing node (1) by the node (2).
M45. Method according to any of the preceding embodiments, wherein the verification document comprises credentials of an entity named in the selected set of applicant data and wherein the method comprises the step of validating the verification document and in turn the entity it pertains to.
M46. Method according to any of the preceding embodiments comprising the step of controlling a step-based applicant data retrieval via the user interface displayed on the node (2).
M47. Method according to any of the preceding embodiments comprising the step of providing banking information based on an input by the applicant to the processing module (1) and/or authorizing the processing module (1) to access a bank account based on the banking information.
M48. Method according to any of the preceding embodiments comprising the step of accessing a banking account based on the provided banking information, wherein accessing the banking account comprises issuing a request to receive bank account statements to a bank account access (X2A) provider (7) and receiving bank account statements from the X2A provider (7).
M49. Method according to any of the preceding embodiments comprising the step of authorizing the processing module (1) for receiving a credit score via a credit score entity and receiving credit score of the applicant from a credit score entity (8) and further qualifying the applicant based on the received credit score.
M50. Method according to any of the preceding embodiments comprising the step of receiving loan data from the X2A provider (7), wherein the loan data comprises information on existing loans of the applicant, and further qualifying the applicant based on the received loan data.
M51. Method according to any of the preceding embodiments comprising the step of evaluating if the bank account balance supports the selected loan option, and comparing the received credit score against a threshold credit score for the selected loan option and evaluating if existing loans support the selected loan option to further qualify the applicant for receiving the selected loan option.
M52. Method according to any of the preceding embodiments comprising the step of providing a binary qualification result indicating the acceptance of the applicant for the selected loan option to the node (2) and/or the node interface module (3).
M53. Method according to any of the preceding embodiments, comprising the step of receiving applicant identification data from an identification provider (9).
M54. Method according to any of the preceding embodiments comprising the step of linking the node (2) to an identification provider (9), and generating application identification data and providing the applicant identification data to the processing module (1).
M55. Method according to any of the preceding embodiments comprising the step of complying with anti-money laundering measures based on the received applicant identification data.
M56. Method according to any of the preceding embodiments comprising the step of generating a set of entities from the provided applicant data, receiving identification data for each entity of the set of entities and to verify that for each entity of the set of entities identification data is received.
M57. Method according to any of the preceding embodiments comprising the step of providing status data to the node (2), wherein the status data comprises identification status information stating which entities are successfully identified via received identification data.
M58. Method according to any of the preceding embodiments comprising the step of providing confirmation data to the node when all data requirements pertaining to the loan option are met.
M59. Method according to any of the preceding embodiments, comprising the step of accessing a loan module (10) and transferring funds from the loan module (10) to an applicant module (11)
M60. Method according to any of the preceding embodiments, wherein the loan module (10) is inaccessible to the applicant and wherein the applicant module (11) is accessible by the applicant to withdraw funds.
M61. Method according to any of the preceding embodiments comprising the step of disbursing a predetermined amount of funds from the loan module (10) to the applicant module (11) based on the selected loan option the applicant is qualified for.
M62. Method according to any of the preceding embodiments comprising the step of requesting a transfer of funds according to the selected loan option from the banking entity to the loan module (10).
M63. Method according to any of the preceding embodiments comprising the step of disbursing a fee, wherein the fee is determined according to a loan condition of the loan, and dividing the fee prior to disbursing to split the fee between at least two separate entities.
M64. Method according to any of the preceding embodiments comprising the step of adding the payback fee and/or the origination fee to the initial loan amount, wherein the initial loan amount is transferred to the loan module (10), wherein the required repayment balance is the sum of the payback fee and/or the origination fee and the initial loan amount.
M65. Method according to any of the preceding embodiments comprising the step of determining a total fee amount comprising at least one fee, and determining a plurality of commissions based on the total fee amount and/or the loan conditions.
M66. Method according to any of the preceding embodiments with features of M65, the method comprising the step of splitting the total fee amount according to predetermined percentages between a plurality of commissions.
M67. Method according to any of the preceding embodiments, wherein the plurality of commissions comprises a bank commission and wherein the method comprises the step of transferring the bank commission to the bank or to grant the bank access to retrieve the bank commission from the loan module (6).
M68. Method according to any of the preceding embodiments comprising the step of calculating a secondary commission based on the loan conditions and transferring the secondary commission to an intermediary or granting the intermediary entity access to retrieve the secondary commission from the loan module (10).
M69. Method according to any of the preceding embodiments comprising the step of calculating a tertiary commission based on the loan conditions and transferring the tertiary commission to a platform entity or granting the platform entity access to retrieve the secondary commission from the loan module (6).
M70. Method according to any of the preceding embodiments comprising the step of processing the sales data, determining the required loan repayment and/or sending sales data of sales performed by the applicant via the platform to a monetization module (12) and receiving payments on the basis of the sales data from the monetization module (12) by the node interface module (3).
M71. Method according to any of the preceding embodiments comprising the step of sending payments to the applicant module (11) based on sales performed by the applicant via the platform.
M72. Method according to any of the preceding embodiments comprising the step of instructing the monetization module (12) to send payments to the loan module (10) based on sales performed by the applicant via the platform.
M73. Method according to any of the preceding embodiments comprising the step of monitoring the loan module (10) for incoming and/or outgoing payments.
M74. Method according to any of the preceding embodiments comprising the step of determining a deduction from incoming payments to the loan module (10) from the monetization module (12) based on the loan conditions of the selected loan option.
M75. Method according to any of the preceding embodiments comprising the step of determining a deduction when payments are received at the loan module (10) from the monetization module (12) and deducting the deduction from payment transfers to the applicant module based on the loan conditions of the selected loan option.
M76. Method according to any of the preceding embodiments comprising the step of transferring the deduction from the loan module (10) to the bank or granting the bank access to retrieve the bank commission from the loan module (10).
M77. Method according to any of the preceding embodiments comprising the step of transferring deductions from a plurality of incoming applicant sales payments and/or a plurality of active loans to the loan module (10).
M78. Method according to any of the preceding embodiments, wherein the loan module (10) comprises a plurality of virtual accounts, wherein each virtual account represents an active loan and/or an applicant, the method comprising the step of assigning a calculated deduction to a respective virtual account of the plurality of virtual accounts and transferring the deduction to that respective virtual account.
M79. Method according to any of the preceding embodiments comprising the step of monitoring the loan repayment according to the loan conditions of the disbursed loan.
M80. Method according to any of the preceding embodiments comprising the step of periodically comparing incoming repayments against a minimum repayment threshold.
M81. Method according to any of the preceding embodiments comprising the step of determining a likelihood value for complete loan repayment by extrapolating a repayment trend based on the recorded loan repayments.
M82. Method according to any of the preceding embodiments comprising the step of determining a likelihood value for complete loan repayment based on secondary applicant data, more specifically based on the history of received payments during a predetermined time interval.
M83. Method according to any of the preceding embodiments comprising the step of issuing a notification to the node (2), to the node interface module (3), the lender and/or the applicant when the minimum repayment threshold is breached.
M84. Method according to any of the preceding embodiments comprising the step of providing repayment data to the monetization module (12) and instructing the monetization module (12) to deduct a repayment amount from incoming applicant sales payments and to transfer the repayment amount to the loan module (10).
M85. Method according to any of the preceding embodiments comprising the step of instructing the monetization module (12) to disburse the remaining funds of the incoming applicant sales payments to the applicant, preferably to the applicant module (11).

### Brief description of figures

The present invention will now be described with reference to the accompanying drawings, which illustrate embodiments of the invention. These embodiments should only exemplify, but not limit, the present invention.
- Fig. 1: schematically depicts a drawing of an embodiment of a resource access system according to the invention.
- Fig. 2A: schematically depicts an embodiment of a first section of the method according to the present invention;
- Fig. 2B: schematically depicts an embodiment of a second section of the method according to the present invention;
- Fig. 2C: schematically depicts an embodiment of a third section of the method according to the present invention;
- Fig. 3: schematically depicts an embodiment of a loan disbursement system according to the present invention;
- Fig. 4: schematically depicts an embodiment of a loan repayment system according to the present invention;
- Fig. 5: schematically depicts an embodiment of a loan repayment method according to the invention.

### Detailed description of Figures

It is noted that not all the drawings carry all the reference signs. Instead, in some of the drawings, some of the reference signs have been omitted for sake of brevity and simplicity of illustration. Embodiments of the present invention will now be described with reference to the accompanying drawings.

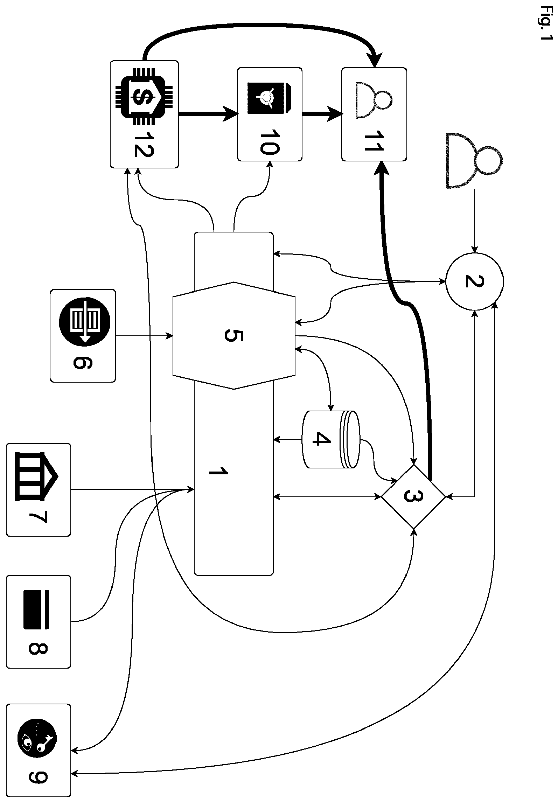

Fig. 1 is a schematic drawing of an embodiment of a resource access system according to the invention. The system comprises a processing module 1 which is configured to generate a resource access option comprising a plurality on contractual conditions based on applicant data pertaining to an applicant applying for resource access. Preferably, the processing module 1 is configured to generate a plurality of contractual options wherein the contractual options differ in at least one contractual condition value i.e., technical specification of a computing grid or camera grid (number/type of processors/cameras), repayment interval, interest rate.

The processing module 1 can be configured to generate an applicant score based on the received applicant data and to compare the applicant score with a score threshold and to qualify the applicant for access to the resource when the applicant score exceeds the score threshold. The processing module 1 can further be configured to adjust hardware settings according to the received applicant data and grant limited resource access to the applicant according to the received applicant data.

The resource access option can be a loan option, wherein the loan option comprises a plurality of loan conditions based on applicant data pertaining to an applicant applying for a loan.

The system can comprise a node 2 configured to receive applicant data in form of an applicant input. The processing module 1 can be configured to transmit loan data and status data pertaining to the status of the loan application to be completed and/or a pending loan application to the node 2. Furthermore, the processing module 1 can be configured to request applicant data from the node 2. The system can comprise a node interface module 3, wherein the processing module 1 can be configured to communicate with the node 2 via the node interface module 3. The node interface module 3 can be configured to provide a communication platform for the node 2, in particular to execute and monitor sales realized by the applicant represented by the node 2.

The system can further comprise a database module 4 configured to store applicant data and/or secondary applicant data. The node interface module 3 is configured to access the database module 4 to store and/or receive applicant data and/or secondary applicant data. The processing module 1 can be configured to receive and/or store applicant data in the database module 4, in particular via a frontend function section 5 of the processing module 1.

The frontend function section 5 can be configured to request and receive further applicant data from the node 2 and/or the node interface module 3.

The system can further comprise an applicant data provider module 6 configured to provide applicant data to the processing module 1 in particular via the frontend function section 5 which can be configured to at least partly validate a set of applicant data based on the applicant data received from the applicant data provider module 6.

Furthermore, the system can comprise an account access provider module 7 configured to provide bank account statements and/or loan data pertaining to active loans of the applicant to the processing module 1.

The system can comprise a credit score entity module 8 configured to provide a credit score of the applicant to the processing module 1.

The system can comprise an identification provider module 9 configured to provide applicant identification data to the processing module 1. The processing module 1 is configured to link the node 2 to the identification provider module 9 which is configured to generate the application identification data based on data provided by the node, which may include electronic verification data (i.e., certificates, qualified signatures, video stream data, scanned documents and/or photos of documents or persons).

The system can further comprise a loan module 10 and an applicant module 11, wherein the processing module 1 is configured to access the loan module 10 and to transfer funds from the loan module 10 to an applicant module 11. The loan module 10 can be inaccessible to the applicant and the applicant module 11 can be accessible by the applicant to withdraw funds. The processing module 1 can be configured to disburse a predetermined amount of funds from the loan module 10 to the applicant module 11 based on the selected loan option the applicant is qualified for. The loan module 10 can be associated with a banking entity and the processing module 1 can be configured to request a transfer of funds according to the selected loan option from the banking entity to the loan module 10. The node interface module 3 can be configured to send payments to the applicant module 11 based on sales performed by the applicant via the node interface module 3.

The system can comprise a monetization module 12 wherein the node interface module 3 is configured to send sales data of sales performed by the applicant via the node interface module 3 to the monetization module 12. The monetization module 12 can be configured to send payments on the basis of the sales data to the node interface module 12 for disbursement, respectively partial disbursement, to the applicant. The processing module 1 can be configured to instruct the monetization module 12 to send payments to the loan module 10 based on sales performed by the applicant via the node interface module 3. The processing module 1 can be configured to calculate a deduction from incoming payments to the loan module 10 from the monetization module 12 based on the loan conditions of the selected loan option.

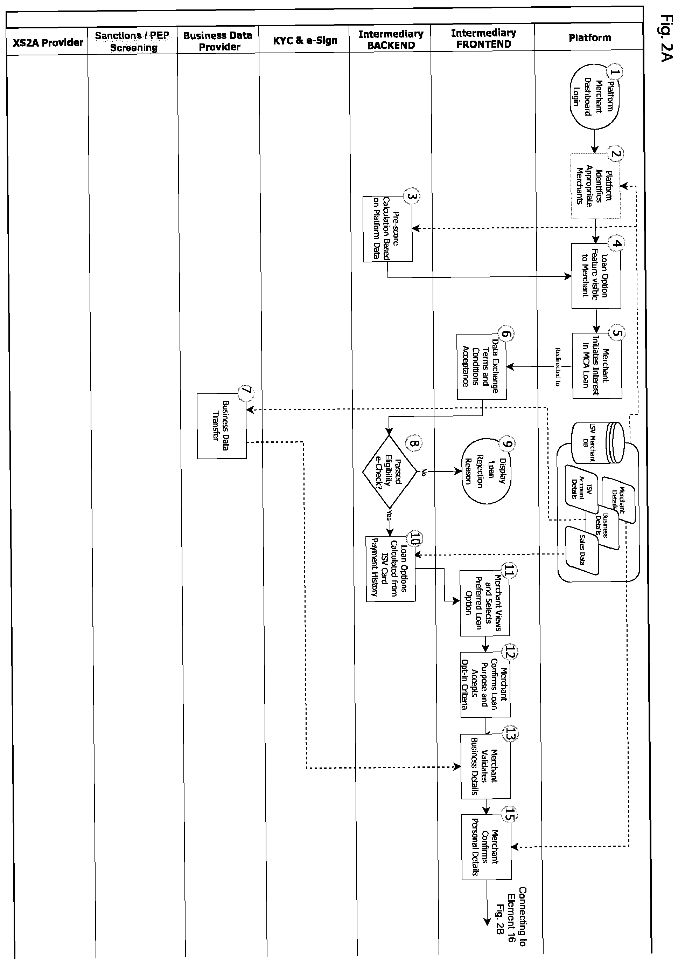

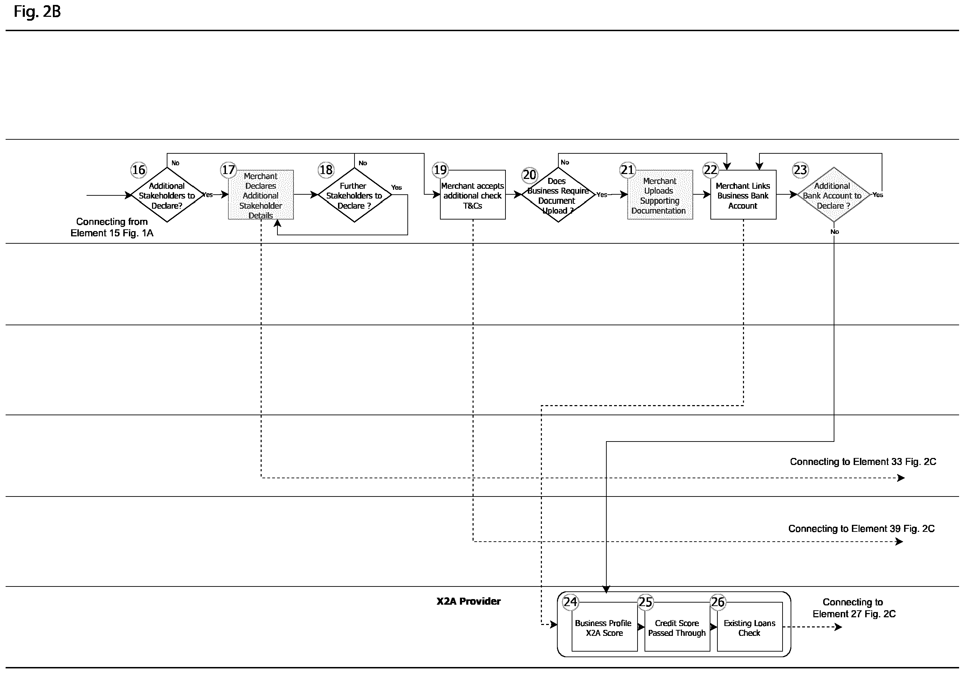

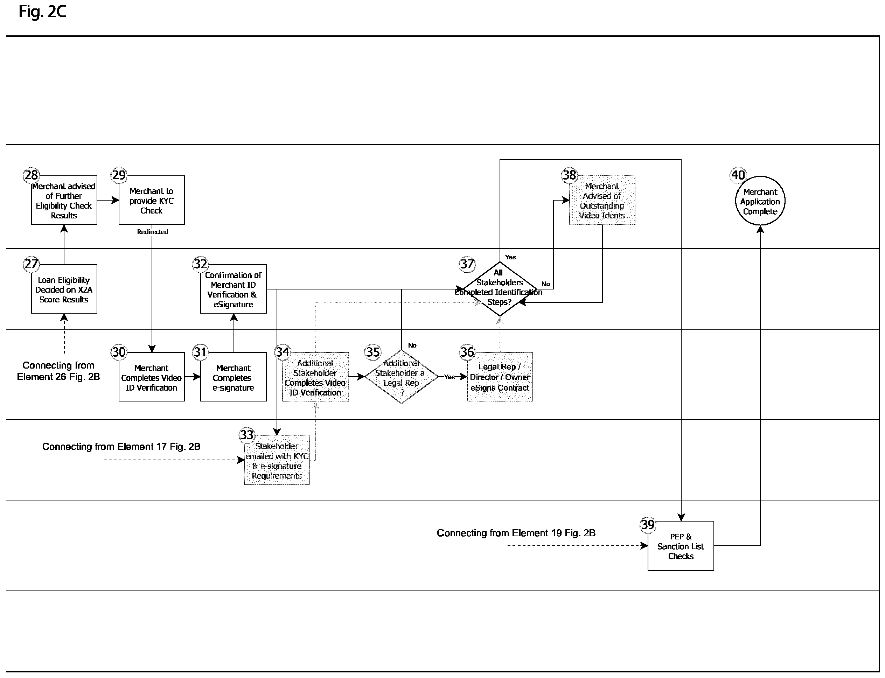

Fig. 2A, 2B and 2C depict a combination of schematic drawings of an embodiment of the method according to the invention. The method can comprise logging in 1 of an applicant to a dashboard of a node interface module. To achieve this step the applicant can provide login credentials via a node to a node interface module hosting the dashboard. The applicant can be a merchant executing sales via the platform. The node interface module can in particular be a platform, more specifically a sales platform or payment provider. Furthermore, the method can comprise identifying 2of the applicant at the platform by referencing existing data from a platform merchant database.

The method can further comprise calculating 3 a pre-score based on platform data, wherein the platform data can comprise merchant data, merchant platform account data, merchant business data and/or merchant sales data. The respective data can be provided via the platform merchant database. Calculating the pre-score can be achieved by means of a processing module, in particular a backend of the processing module, wherein the processing module can be logically separated from the platform. The processing module can be integrated as a separate module into the platform. Alternatively, the processing module can be a separate module to which the platform links.

Further, the method can comprise the step of providing 4 a loan option to the merchant as a visually indicated feature on the platform, respectively dashboard. The merchant can then initiate 5 the loan application. In particular the merchant can be offered a merchant cash advance (MCA) loan. With initiating the loan procurement, the merchant can be redirected to a frontend of the processing module. The method can comprise the step of exchanging 6 data between the merchant and the frontend to make all necessary information available to the frontend, respectively the processing module to complete the loan, specifically the loan application.

The data exchanged can pertain to the entity type the applicant represents. Specifically, the merchant can confirm whether the loan application pertains to an individual (i.e., a freelancer, sole trader, registered merchant or to a company (i.e., GbR, GmbH, AG, UG, Limited etc.).

Furthermore, exchanging data can comprise the merchant accepting compulsory terms and conditions in order to progress with the loan application and/or to permit further background checks regarding merchant and/or company information. This can include general terms and conditions, customer information & data processing acceptance, in particular relating to data protection laws, information on tax residency, provision of a tax identification number and/or a confirmation that the applicant is not acting on the initiative of a third party, in particular a party concealed from the platform and/or processing module.

The frontend of the processing module can be accessible to the applicant and/or the platform and configured to handle data exchange with the applicant, respectively the platform. The backend of the processing module can be inaccessible to the applicant and/or the platform and configured to perform a multistep qualification of the applicant for a loan and to generate a loan based on the data provided by the applicant and/or the platform. The frontend and the backend can be provided by an intermediary entity.

The method can further comprise the step of checking 8 the eligibility of the merchant, in particular by performing a pre-check of the merchant. The result of the eligibility check can be a binary PASS-or-FAIL result. The checking can be performed by the backend.

The checking can comprise at least one of the following criteria:
- applicant is a registered member, in particular a member of the platform;
- a company represented by the applicant needs to be registered in an accepted jurisdiction;
- the applicant having an accepted merchant category code;
- a predetermined amount of time of active business operation;
- providing applicant data to verify the status as a legal representative - capable of applying for the loan on behalf of a company.

When the merchant fails the eligibility check the loan application can be terminated and the method can comprise the step of displaying 9 the loan rejection to the merchant via displaying respective information on the dashboard including the rejection reason. In case the eligibility check is passed, the loan application can continue.

Additionally, the method can comprise the step of transferring 7 business data. In particular, business data can be transferred from the platform merchant database to a business data provider or vice versa. The applicant can provide basic information that can be completed or enhanced with data from an applicant data provider to generate a full profile of the interested company. This basic information can comprise the company address and/or registration number. The data acquired from the applicant data provider can be used by the processing module for validating data about the applicant, respectively the represented company.

When the applicant entity is a freelancer and/or sole-trader business the respective name can be provided to acquire the credentials via the applicant data provider.

The method can comprise the step of calculating 10 a plurality of loan options based on platform sales data, in particular a history of sales completed by the merchant via the platform. The platform sales data can be stored in the platform merchant database. Calculating the loan options can be achieved by means of the backend.

A loan option can comprise the loan amount, a one-time fixed fee, a percentage value of daily sales set for repayment of the loan and/or an estimated repayment time (i.e., 12 months). The plurality of loan options can comprise a minimum, medium and maximum option, wherein at least one parameter is set to the minimum allowable value in the minimum option, to the median allowable value in the medium option and/or to the maximum allowable value in the maximum option. The merchant can indicate a customization to the processing module to customize the loan option. In particular, the merchant can set a parameter value within the limits of the minimum and maximum option for the respective parameter.

Furthermore, the method can comprise the step of the merchant viewing 11 the generated loan option, in particular the plurality of loan options. The method can comprise the step of the merchant selecting a loan option from the plurality of loan options and based on the selected loan option issue a request, respectively application for a loan to be granted according to the selected loan option.

Additionally, the method can comprise the step of confirming 12 at least one Opt-in criterium by the node, respectively the applicant. The Opt-in criterium can be one of the following:
- Confirming the company and its associates represented by the applicant have no links to operations within the United States of America:
   ∘ Account holder and UBOs must not be established within the USA
   ∘ Account holder and UBOs must not have Tax Residency within the USA
   ∘ Company must not have been established under the laws of the USA
- Identify whether applicant and/or represented company has other existing loans in progress
- Identify whether applicant and/or company has had a loan terminated within the last 12 months
- Confirm acceptance of terms and conditions associated with the loan
- Declare business purpose of the loan

The method can comprise the step of the node interface module and/or the processing module issuing a request to the node to opt-in to a plurality of Opt-in criteria. Optingin can comprise providing the requested information according to the respective Opt-in criterium.

The method can comprise the step of validating 13 applicant data, in particular data pertaining to the company represented by the applicant. The applicant data can be auto-populated from applicant data made available by the platform, in particular by the platform database, and/or made available by an applicant data provider.

Validating the applicant data can comprise updating incorrect information, adding more information, confirming legal representation status of the applicant regarding the company, respectively business.

The method can further comprise the step of confirming 14 information pertaining to a current acquirer. The acquirer can be a payment provider configured to manage transactions regarding sales executed via the platform. In particular, the acquirer can be configured to credit a sum to an applicant account. The processing module can be configured to redirect credits pertaining to sales completed after the loan is granted from the current acquirer, respectively monetization module, to a loan module.

The processing module can communicate with the acquirer to initiate a change over from issuing payments to an applicant account to a loan account. The provision of the associated acquirer information can be automated.

The method can comprise the step of confirming 15 applicant information, in particular personal information of the applicant. The applicant information communicated to the node can be pre-populated with data from the platform database. The applicant information can be amended via the node.

Furthermore, the method can comprise the step of confirming 16 additional stakeholders, which can comprise declaring the additional stakeholders to the platform module and/or the processing module. Confirming additional stakeholders can depend on the type of company the loan shall be granted to and may comprise one of the following:
- An applicant which is or represents a freelancer, sole proprietor or e.K. may not have to declare any additional stakeholders, respectively beneficiaries, but may instead confirm the status as an independent operator;
- - An applicant representing a Gbr company forms may need to provide the details of all individual shareholders and their percentage stake in the company;
- GmbH & UG forms may need to declare any UBO Ultimate Beneficial Owner with more than 25.0% ownership of the business;
- Any Legal Representatives of the applicant and/or the represented company may need to be declared.

The method can comprise the step of providing 17 information pertaining to legal representatives and/or UBOs.

The method can comprise the step of providing 18 information pertaining to a plurality of representatives and/or UBOs of the applicant, respectively the company the applicant represents.

The method my comprise the step of authorizing 19 a check of the provided personal data of the applicant and other entities, namely representatives and UBOs. The check can include a check of the provided information against sanctions and/or a third-party PEP screening.

The method can comprise the step of determining 20 whether additional documents are required to proceed with the loan approval. In case additional documents are required, the method can comprise providing 21 these documents, wherein the required documents can vary depending on the type of applicant:
- Freelancer: No document upload required:
- Sole Proprietor: business registration (Gewerbeanmeldung);
- Gbr: business registration and articles of association (Gesellschaftsvertrag);
- e.K., GmbH and UG: trade register excerpt (Handelsregisterauszug).

The method can comprise the step of providing 22 bank account information, wherein the bank account information can comprise an authorization for the processing module to access the bank account. The bank account information can be acquired from the node in a sequential dialogue. The providing of bank account information can comprise an authorization for credit check processing. The credit check processing can be performed by a X2A 3rd party service provider, which can issue a request for providing further applicant information to the node. Furthermore, the bank account information can comprise information pertaining to a plurality of bank accounts linked to the applicant, respectively the represented company. Thus, the method can comprise providing 23 bank account information for multiple bank accounts.

The method can comprise the step of providing 24 a X2A (Access to Account) score. The X2A score can be generated by the X2A 3rd party service provider and can represent an evaluation of the company. The processing module may determine whether to grant a loan to the applicant based on the provided score.

The method can comprise the step of providing 25 a first credit score as the X2A score, in particular, when the applicant is a B2B-merchant. Alternatively, the method can comprise providing 26 a second credit score as the X2A score, in particular, when the applicant is a B2C-merchant.

The method can comprise the step of checking 26 for existing loans granted to the applicant. The check can be performed by the X2A 3rd party service provider and may ensure that the applicant, respectively the represented company, does not already have an existing loan in place.

The method can comprise the step of determining 27 a loan eligibility. The loan eligibility can be determined on the basis of a plurality of scores, in particular scores received from the X2A 3rd party service provider. When the loan eligibility exceeds a per loan predetermined threshold the loan application may proceed. The processing module can be configured to determine the loan eligibility.

The method can comprise the step of providing 28 the loan eligibility to the node, respectively the applicant. The loan eligibility may be represented as a binary PASS or FAIL result.

The method can comprise the step of integrating 29 the loan eligibility into an applicant interface i.e., a dashboard of the platform module accessible to the applicant. Integrating may include a visual indication to the applicant in the form of a text message, Symbol and/or color code visualizing the loan eligibility. The loan eligibility may further be provided to the applicant via a separate communications network, i.e., via email to provide greater visibility for applicants that do not or not regularly check the dashboard.

The method can comprise the step of redirecting 30 the applicant to an ID validation provider. The process module can receive identification validation information from the ID validation provider, which validates the identity of the applicant. For example, the applicant can be validated via confirming an identity based on an identification document, a video recording of the applicant and/or a live video feed showing the applicant. The applicant identification data can, for example, be generated via a video ident method, a photo ID method, a digital certificate verification method, a digital identification document or any anti money laundering compliant identification confirmation procedure.

The processing module can be configured to comply with anti-money laundering measures based on the received applicant identification data.

The method can comprise the step of providing 31 an electronic signature e-signature by the applicant. The e-signature can be provided via a signatory or certification service provider and may include the following:
- A conditional signing of the loan agreement contract, which amounts to a legally binding document confirming the applicant's intent to proceed with the loan application and/or the redirection of payments to a loan account. This can be subject to acceptance by the loan provider;
- An authorization of the processing module, respectively the entity controlling the processing module to switch an acquirer settlement account over to the loan account.

The electronic signature from the applicant can provide a legal confirmation to proceed with the loan and the 3rd party identification e-signature process permits the signing of the contract with customers online. Instead of requiring a handwritten signature a qualified electronic signature (QES) can be created which may be considered equally valid compared to the handwritten signature.

The method can comprise the step of confirming 32 the completion of ID verification and e-signing by the applicant. Both the ID verification and e-signing steps which are, in particular, provided by a 3rd party supplier are confirmed as complete and passed.

The method can comprise the step of requesting 33 signatures and legitimization according to a KYC-check Know Your Customer from the named stakeholders. Additional representatives and/or owners can be contacted via email with next step instructions to complete KYC identification validation and/or contract acceptance e-signature by the processing module.

The method can comprise the step of verifying 34 the completion of the identification of the stakeholders, representatives and/or owners. The additional stakeholders identified by the primary applicant may carry out an identification procedure.

The method can comprise the step of verifying 35 the completion of the e-signature of the stakeholders, representatives and/or owners according to predetermined requirements based on the type of company.

The method can comprise the step of providing 36 an electronic signature e-signature by at least one further named stake holder. The e-signature can be provided via a signatory or certification service provider and may include the following:
- A conditional signing of the loan agreement contract, which amounts to a legally binding document confirming the applicant's intent to proceed with the loan application and/or the redirection of payments to a loan account. This can be subject to acceptance by the loan provider;
- An authorization of the processing module, respectively the entity controlling the processing module to switch an acquirer settlement account over to the loan account.

The electronic signature from the respective stake holder can provide a legal confirmation to proceed with the loan and the 3rd party identification e-signature process permits the signing of the contract online. Instead of requiring a handwritten signature a qualified electronic signature (QES) can be created which may be considered equally valid compared to the handwritten signature.

The method can comprise the step of confirming 37 the completion of ID verification and e-signing by the stake holders. Both the ID verification and e-signing steps which are, in particular, provided by a 3rd party supplier are confirmed as complete and passed.

The method can comprise the step of providing 38 status information to the node, respectively the applicant, on the status of the identification process i.e., video identification, e-signature of the named stake holders. In particular, information regarding mandatory outstanding processes is provided to the applicant.

The node can be configured to trigger a manual reminder based on an applicant input, which reminds the entities with outstanding processes of the necessity for completion.

The method can comprise the step of performing 39 a check against a sanctions list and/or performing a PEP screening, in particular, by a 3rd party service provider of the applicant and/or any additionally declared stakeholders. The sanctions check may include a check against politically exposed persons and/or further sanction lists.

Entities to be checked can be declared owners, managing directors, shareholders and/or further authorized parties.

The method can comprise the step of reviewing 40 the completed loan application. The review may be executed within 1 to 10 business days, preferably within two business days. Once the loan application review is complete the applicant can be informed regarding the grant of the loan. In particular, the review and information may be executed within 1 to 10 business days, preferably within 2 business days.

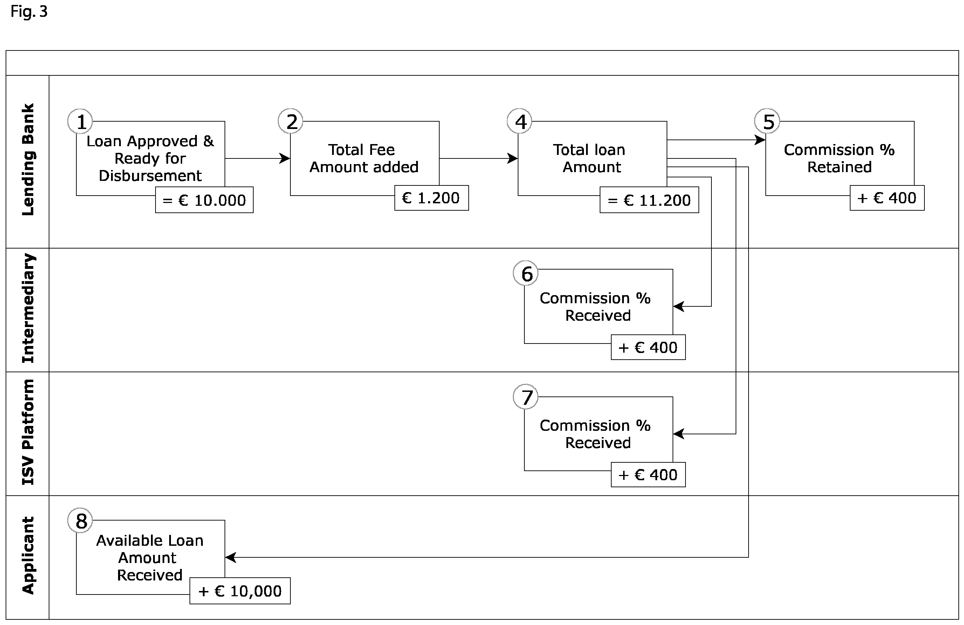

Fig. 3 is a schematic drawing of an embodiment of a loan disbursement system according to the invention. Once the loan is granted to the applicant, the loan can be disbursed. The system can comprise a loan disbursement account 1, respectively a loan module, which is configured to receive a credit from the lending bank when the loan is approved and ready for disbursement. The system further comprises a processing module which is configured to determine a fee and transfer the fee from the loan disbursement account 1. The processing module can be configured to determine a plurality of fees and transfer each fee of the plurality of fees to a respective receiving entity. Preferably, the processing module can add a total fee amount 2 to the loan amount. In particular, the processing module can determine a payback fee based on a payback factor and/or an origination fee which can be a fixed amount. The payback fee can be the delta of the payback factor and 1 multiplied by the loan amount; e.g., with a payback factor of 1.05, the fee amount is 0.05 (1.05 - 1.00) times the loan amount.

The origination fee can be determined by the processing module and/or the entity in control of the processing module based on the agreement of the loan bank and the applicant to enter into the loan agreement.

Furthermore, a total loan amount 4 can be determined. The processing module can further be configured to determine a bank commission 5 based on the total loan amount 4. The bank commission 5 can be retained by the lending bank. The commission 5 can be a percentage of the total fee amount 4. The processing module can be configured to transmit the bank commission 5 to an account associated with the lending bank.

Furthermore, the processing module can be configured to determine a facilitation commission 6 based on the total loan amount 4, wherein the facilitation commission 6 is credited towards the entity which is providing the processing module. The facilitation commission 6 can be a percentage of the total fee amount 4.

Additionally, the processing module can be configured to determine a platform commission 7 based on the total loan amount 4, wherein the platform commission 7 is credited towards the platform, respectively the entity which is in control of the platform. The platform can be the node interface module, respectively a sales platform on which the applicant executes sales. The platform commission 7 can be a percentage of the total fee amount 4.

The system can comprise an applicant module 8. The processing module can be configured to credit an available loan amount to the applicant, respectively the applicant module 8 which is configured to accept withdrawals by the applicant. The available loan amount can be the remaining balance from the approved loan minus the total fee amount.

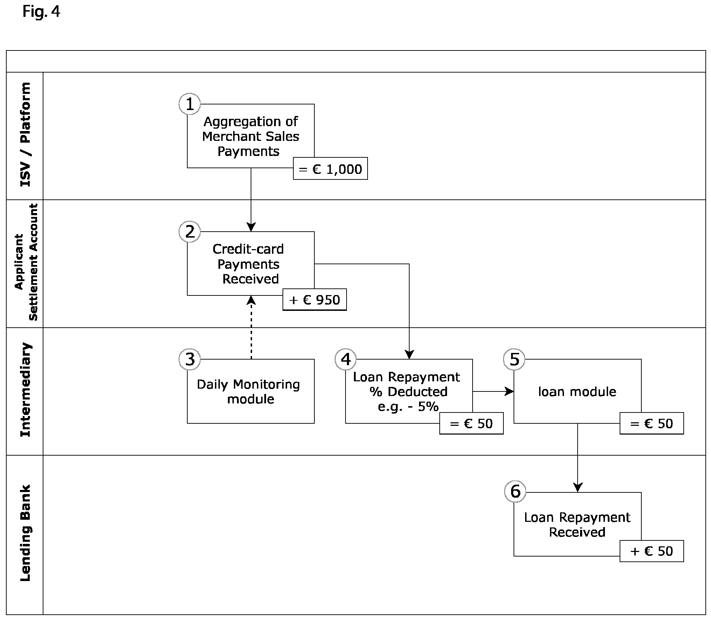

Fig. 4 is a schematic drawing of an embodiment of a loan repayment system according to the invention. Once the loan is granted to the applicant, the loan can be repaid. The system comprises a monetization module 1 which is configured to accumulate credits relating to sales performed by the applicant after the loan is approved. The incoming credits can be individual payments of buyers. Furthermore, the system can comprise a loan module 2. The monetization module 1 can be configured to forward accumulated credits to the loan module 2. Preferably, the monetization module 1 is configured to forward the accumulated credits periodically (i.e., hourly, daily, monthly). The loan module 2 can represent a merchant settlement account.

The system can further comprise a processing module, which comprises a monitoring section 3 configured to monitor the loan module for incoming credits. The monitoring section 3 is preferably configured to check the loan module periodically, i.e., daily. The processing module is configured to determine a loan repayment deduction 4 based on the loan conditions i.e., a repayment rate and/or the credit balance of the loan module. The loan repayment deduction can be in the range of 1 % to 30% of the applicant's periodic acquiring settlement volume. Preferably, the loan repayment deduction 4 can amount to 5 % of the applicant's periodic acquiring settlement volume. The processing module can be configured to schedule the loan repayment, in particular, to complete the repayment within a payback term. The payback term can range from 1 to 24 months, preferably 12 months.

The processing module can further be configured to forward the loan repayment deduction to an intermediary account 5 which is configured to receive and accumulate loan repayment deductions. The processing module can be configured to manage loan repayment deductions for a plurality of applicants and/or a plurality of loans via the intermediary account 5.

Furthermore, the processing module can be configured to forward the loan repayment deductions to an account of the lending bank.

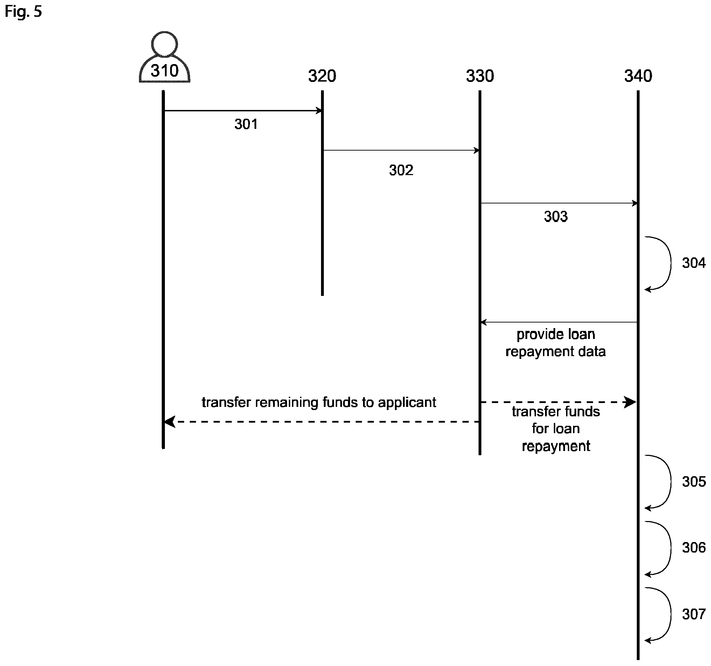

Fig. 5 is a schematic drawing of an embodiment of a loan repayment method according to the invention. The method comprises the step of executing sales 301 via the platform 320 by the applicant 310 and collecting payments 302 according to the executed sales. The payments can be acquired by a monetization module 330. The method can further comprise the step of receiving payment data 303 by an intermediary 340 from the monetization module 330. The method can further comprise the step of generating repayment data 304 by the intermediary 340.

The intermediary can be configured to generate the repayment data based on a current loan of the applicant 310. The current loan can comprise loan conditions, in particular a repayment rate. The repayment rate can be defined as a percentage of periodic acquiring settlement volume. The settlement volume can be acquired by the monetization module 330 from customers issuing payments pertaining to sales of the applicant 310 to the customers via the platform 320. The intermediary 340 can determine the repayment amount as the product of the applicant's periodic acquiring settlement volume and a loan repayment rate set by a loan condition of the loan.

The intermediary may further generate a payback term as part of the loan repayment data, wherein the payback term is the timeframe the applicant is expected to pay back the loan amount. Additionally, the intermediary can generate a minimum repayment value which defines the minimum sum of the applicant's periodic (i.e., daily, weekly, monthly, yearly etc.) repayments in order to pay back the loan amount within the payback term.

The method can further comprise the step of monitoring a collection account 305, wherein incoming payments are credited to the collection account by the monetization module 330.

The method can comprise the step of assigning repayments to a loan account 306, wherein repayments deducted from the incoming payments, respectively the collection account 305, can be credited to the loan account to repay the loan.

Furthermore, the method can comprise the step of monitoring the repayments 307 to evaluate whether the targeted repayment timeframe can be met.

## Claims

1. System for automatic security evaluation, the system comprising a processing module (1) and a node (2) configured to provide applicant data, wherein the processing module (1) is configured to receive applicant data from the node (2),
wherein the system comprises a data module (4) configured to provide secondary applicant data,
wherein the processing module (1) is configured to generate an access condition based on the received applicant data and secondary applicant data, and to qualify an applicant for receiving an access grant including the access condition on the basis of the applicant data and secondary applicant data.

2. System according to the preceding claim, comprising a node interface module (3) configured to communicate with the node (2) and to communicate with the processing module (1), wherein the node interface module (3) is configured to generate secondary applicant data and store the secondary applicant data in the data module (4).

3. System according to claim 2, wherein the node interface module (3) is configured to generate a first eligibility information of the applicant based on the received applicant data and to transmit the first eligibility information to the processing module (1).

4. System according to claim 3, wherein the processing module (1) and/or the node interface module (3) is/are configured to receive secondary applicant data and to generate a primary qualification result based on the received applicant data, secondary applicant data and/or the first eligibility information.

5. System according to any of the preceding claims, wherein the processing module (1) is configured to request and receive acceptance data from the node (2) and/or the node interface module (3).

6. System according to any of the preceding claims, wherein the processing module (1) is configured to process the secondary applicant data to generate a request for receiving further applicant data from an applicant data provider (6), and wherein the processing module (1) is configured to generate a secondary qualification result based on the applicant data, secondary applicant data, further applicant data and/or the acceptance data.

7. System according to claim 2, wherein the processing module (1) is configured to generate an access grant option comprising a plurality of access conditions,
to adjust the access conditions based on the secondary applicant data,
to provide the access grant option to the node (2), wherein
the node (2) is configured to modify an access grant option based on an applicant input and to provide the modified access grant option as a selected grant option to the processing module (1).

8. System according to any of the preceding claims, wherein the processing module (1) is configured to generate a tertiary qualification result, wherein the tertiary qualification comprises at least one of the following: checking for active access grants, checking for previous access grant terminations, confirming the acceptance of terms and conditions associated with the selected grant option, receive and evaluate the purpose of the selected grant option.

9. System according to any of the preceding claims, wherein the processing module (1) is configured to generate a selected set of applicant data based on the applicant data received from an applicant data provider (6) and/or the secondary applicant data, and wherein the processing module (1) is further configured to perform a fourth qualification based on the selected set of applicant data.

10. System according to claim 9, wherein the processing module is configured to receive credentials of at least one entity declared in the selected set of applicant data, check the at least one entity against a set of exclusion rules, receive at least one score and/or compare the at least one score with a score threshold value to generate the fourth qualification.

11. System according to any of the preceding claims, wherein the processing module (1) is configured to receive at least one score and to determine an applicant score based on the applicant data, secondary applicant data and/or the at least one score, and wherein the processing module (1) is further configured to modify a set of parameters for determining the applicant score according to requirements of the platform and/or according to requirements of an access provider.

12. System according to any of the preceding claims, wherein the system further comprises a loan module (10), wherein the processing module (1) is configured to disburse a predetermined amount of funds from the loan module (10) to the applicant based on the selected access option the applicant is qualified for.

13. System according to any of the preceding claims, wherein the processing module (1) is configured to access a banking account based on banking information provided by the node (2), wherein accessing the banking account comprises issuing a request to receive bank account statements to a bank account access provider (7) and receiving bank account statements from the bank account access provider (7), and wherein
the processing module (1) is further configured to receive loan data from the bank account access provider (7), wherein the loan data comprises information on existing loans of the applicant, and configured to further qualify the applicant based on the received bank account statements and/or loan data .

14. System according to any of the preceding claims, wherein the processing module (1) is configured to link the node (2) to an identification provider (9), wherein the identification provider (9) is configured to generate application identification data and to provide the applicant identification data to the processing module (1).

15. System according to any of the preceding claims, wherein the processing module (1) is configured to determine a plurality of fees based on the loan option the applicant qualified for, and to add the plurality of fees to a loan amount of the loan option, wherein the processing module (1) is further configured to disburse each fee of the plurality of fees to a respective fee receiving entity.

16. System according to any of the preceding claims, wherein the processing module (1) is configured to receive sales data of platform sales performed by the applicant via the node interface module (3) from the data module (4), wherein the node interface module (3) is configured to send sales data of sales performed by the applicant via the node interface module (3) to a monetization module (12), wherein the monetization module is configured to provide payments based on the sales data, and wherein the processing module (1) is configured to determine a deduction from the payments on the basis of the loan condition and to transfer the deduction to repay the loan.

17. System according to claim 16, wherein the processing module (1) is configured to monitor if the payments provided by the monetization module (12) are sufficient to fulfill the loan condition, and wherein the processing module (1) is further configured to generate a loan fulfillment forecast based on the payments, wherein the loan fulfillment forecast comprises a likelihood for repayment of the loan within the parameters of the loan condition.

18. Method for automatic security evaluation, wherein the method comprises the step of
providing applicant data by a node (2),
receiving applicant data from the node (2) by a processing module (1),
providing secondary applicant data by a data module (4),
generating an access condition based on the received applicant data and secondary applicant data by the processing module (1), and
qualifying an applicant for receiving an access grant including the access condition on the basis of the applicant data and secondary applicant data by the processing module (1).
